(19) **Europäisches Patentamt**
**European Patent Office**
**Office européen des brevets**

(11) **EP 4 129 902 A1**

(12) **EUROPEAN PATENT APPLICATION**
published in accordance with Art. 153(4) EPC

(43) Date of publication:
08.02.2023 Bulletin 2023/06

(21) Application number: 21782355.8

(22) Date of filing: 30.03.2021

(51) International Patent Classification (IPC):
**C01B 32/20** (2017.01)    **C01B 32/158** (2017.01)
**C01B 32/182** (2017.01)

(52) Cooperative Patent Classification (CPC):
**C01B 32/158; C01B 32/168; C01B 32/182;**
**C01B 32/194; C01B 32/20; C01B 32/21;**
**H01B 1/24; H01G 11/32; H01G 11/36; H01M 4/62;**
Y02E 60/10

(86) International application number:
**PCT/JP2021/013636**

(87) International publication number:
**WO 2021/201002 (07.10.2021 Gazette 2021/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 03.04.2020 JP 2020067315

(71) Applicant: **Toyo Ink SC Holdings Co., Ltd.**
**Tokyo 104-0031 (JP)**

(72) Inventors:
• **MOROISHI Yasuyuki**
**Tokyo 104-0031 (JP)**
• **WATANABE Hiroto**
**Tokyo 104-0031 (JP)**
• **MIYAFUSA Yuka**
**Tokyo 104-0031 (JP)**

(74) Representative: **Becker, Eberhard**
**Becker Kurig & Partner**
**Patentanwälte mbB**
**Bavariastraße 7**
**80336 München (DE)**

(54) **BORON-DOPED CARBON MATERIAL, CONDUCTIVE COMPOSITION, CONDUCTIVE FILM, AND ELECTRIC STORAGE DEVICE**

(57)    The objective of the present invention is to provide a carbon material excellent in conductivity. The carbon material according to the present invention has a graphene sheet as a basic skeleton and is doped with boron so that carbon is substituted with boron, the carbon material being characterized in that the boron content in the carbon material is 0.005-15 mol%, and when the content of dopant boron that substitutes carbon on the surface of the carbon material is denoted by X (mol%) and the content of boron in the carbon material is denoted by Y (mol%), X/Y < 0.8 is satisfied.

FIG. 1

**Description**

[Technical Field]

The present invention relates to a boron-doped carbon material, a conductive composition, a conductive film, and an electric storage device.

[Background Art]

In recent years, the development of electronics has been remarkable, and conductive materials used in various electronic devices have been required to be smaller, lighter and cheaper products and have a longer lifespan in various usage environments. For example, when a substrate wiring of an electronic device and a wiring connecting electronic devices are produced, a conductive composition having favorable conductivity is required, but a conductive composition using metal fillers of silver, copper or the like is general, and a major cost problem still remains unsolved. On the other hand, various studies have been made on conductive compositions using conductive carbon without metals, but their poor conductivity has limited their use to semi-conductivity applications such as antistatic applications.

In addition, regarding conductive carbon materials, various conductive materials with low volume resistivity such as graphite and carbon nanotubes have already been studied, but the volume resistivity is still significantly high and there is a problem in improvement of conductivity, compared with metal fillers exhibiting very high conductivity with a volume resistivity of less than $10^{-4}$ $\Omega\cdot$cm.

Therefore, Patent Literature 1 and 2 report studies on doping of carbon nanotubes with boron by heating the carbon nanotubes and a boron compound at a high temperature in order to improve electrical properties. Conductivity with a volume resistivity level of $10^{-2}$ $\Omega\cdot$cm has been obtained by adding 3 mass% or more of a boron compound to multi-walled carbon nanotubes and performing high-temperature heating at a maximum of 3,000°C, but further improvement in conductivity is required. In addition, another problem is that analysis of how boron is doped into carbon nanotubes is insufficient, and the relationship between the boron doping state and the conductivity has not been clarified. On the other hand, it has been reported that, when carbon nanotubes having a diameter of 10 nm or less are doped with boron by performing high-temperature heating at 1,600°C or higher, it is difficult to maintain the shape of carbon nanotubes, and single-walled carbon nanotubes and double-walled carbon nanotubes decompose, and thus the relationship between the boron doping state and the conductivity of the boron-doped carbon material is further complicated.

In addition, Patent Literature 3 reports a study of doping boron by adding about 3 mass% of a boron source to graphene nanoplatelets having a very small thickness of 100 nm or less. In this report, excellent conductivity with a volume resistivity of less than $10^{-3}$ $\Omega\cdot$cm is obtained, but there is still a need to improve conductivity compared to metal fillers. In addition, although the content of boron in the boron-doped carbon material is disclosed, it is not clarified how the carbon material is doped with boron.

Therefore, when the boron doping state of the boron-doped carbon material is analyzed, and the relationship between the doping state and the conductivity is further clarified, it is assumed that it will be possible to further improve the conductivity of the boron-doped carbon material.

[Citation List]

[Patent Literature]

[Patent Literature 1] Japanese Patent Laid-Open No. 2000-2813238
[Patent Literature 2] Japanese Patent Laid-Open No. 2009-256118
[Patent Literature 3] PCT International Publication No. WO 2014/185496

[Summary of Invention]

[Technical Problem]

An objective of the present invention is to provide a carbon material having excellent conductivity.

[Solution to Problem]

The present invention relates to a carbon material having a carbon hexagonal network plane as a basic skeleton and doped with boron to replace carbon, wherein the content of boron in the carbon material is 0.005 to 15 mol%, and when the content of boron doped to replace carbon on the surface of the carbon material is X (mol%) and the content of boron in the carbon material is Y (mol%), X/Y<0.8 is satisfied.

In addition, the present invention relates to the carbon material, wherein the carbon material contains at least one selected from the group consisting of graphite, graphene nanoplatelets, graphene, and carbon nanotubes.

In addition, the present invention relates to the carbon material, wherein 0.01<X/Y<0.4 is satisfied.

In addition, the present invention relates to a conductive composition including the above carbon material and at least one of a binder resin and a solvent.

In addition, the present invention relates to the conductive composition, wherein the carbon material contains two or more different carbon materials.

In addition, the present invention relates to the conductive composition further including a conductivity aid.

In addition, the present invention relates to the conductive composition further including an active material, wherein the conductive composition is used as a mixture ink for forming a positive electrode or negative electrode for an electric storage device.

In addition, the present invention relates to a conductive film formed from the above conductive composition.

In addition, the present invention relates to an electric storage device including an electrode having a mixture layer formed from the above conductive composition.

[Advantageous Effects of Invention]

According to the present invention, when a carbon material having a carbon hexagonal network plane containing boron as a basic skeleton and containing boron doped to replace carbon on the surface has a specific boron content, it is possible to provide the carbon material having excellent conductivity.

[Brief Description of Drawings]

Fig. 1 is a diagram showing an example of B1s spectrum peaks and peak separation in XPS.
Fig. 2 is a diagram showing peaks of a G band and a D band of a carbon material in a laser Raman spectrum.

[Description of Embodiments]

Hereinafter, the present invention will be described in detail. Here, in this specification, "a carbon material having a carbon hexagonal network plane as a basic skeleton and doped with boron to replace carbon" may be simply referred to as a "boron-doped carbon material."

<Boron-doped carbon material>

A boron-doped carbon material of the present invention will be described. The boron-doped carbon material is a material having a carbon hexagonal network plane that forms a network plane in which carbon atoms are covalently bonded in a hexagonal network form as a basic skeleton, and has physical/chemical interactions (bonds) between their constituent units, and containing boron, which is a carbon material containing boron doped to replace at least carbon. Here, "boron doped to replace carbon" indicates boron replacing carbon in the carbon hexagonal network plane, boron that replaces carbon at the edge of the carbon hexagonal network plane on the surface of the carbon material, boron bonded to carbon such as defects and deficient parts that are present as vacancies in the carbon hexagonal network plane on the surface of the carbon material, or boron bonded to carbon so that it bridges carbon hexagonal network planes near the surface of the carbon material, and these boron entities can be measured by X-ray photoelectron spectroscopy (XPS) to be described below.

The content of boron in the boron-doped carbon material of the present invention (content of boron in the entire carbon material) is 0.005 to 15 mol%, preferably 0.01 to 10 mol%, more preferably 0.08 to 5 mol%, and still more preferably 0.1 to 2 mol%. When the content of boron is less than 0.005 mol%, the doping effect of boron cannot be obtained and the conductivity is not improved. When the content of boron is 15 mol% or more, excess boron inhibits movement of electrons, resulting in a decrease in conductivity. Therefore, when the content is in a range of 0.005 to 15 mol%, favorable conductivity can be exhibited.

In addition, when the carbon material contains boron, the wettability with respect to a solvent and a binder resin is improved and the dispersion of a dispersion liquid is improved. In addition, when the boron content is large, the hardness of the carbon material tends to increase, and the durability against an external force such as impact is improved, and thus the dispersion stability and the film strength are improved. On the other hand, since dispersion tends to be difficult when the boron content is large, in consideration of the strength and dispersion of the carbon material, the boron content is preferably 2 mol% or less, and more preferably 1.1 mol% or less.

The content of boron in the boron-doped carbon material can be determined by a method such as ICP optical emission spectrometry or ICP mass spectrometry. As an example, a measurement method according to JIS-R7223 may be exemplified. In addition, the content of boron in the boron-doped carbon material is the amount of elemental boron contained in the surface or the inside of the carbon material, boron doped to replace carbon in the carbon material, or a total amount of boron in the boron compound.

Next, boron doped to replace carbon on the surface of the boron-doped carbon material of the present invention will be described. The content of boron doped to replace carbon on the surface of the boron-doped carbon material can be determined by a method such as X-ray photoelectron spectroscopy (XPS).

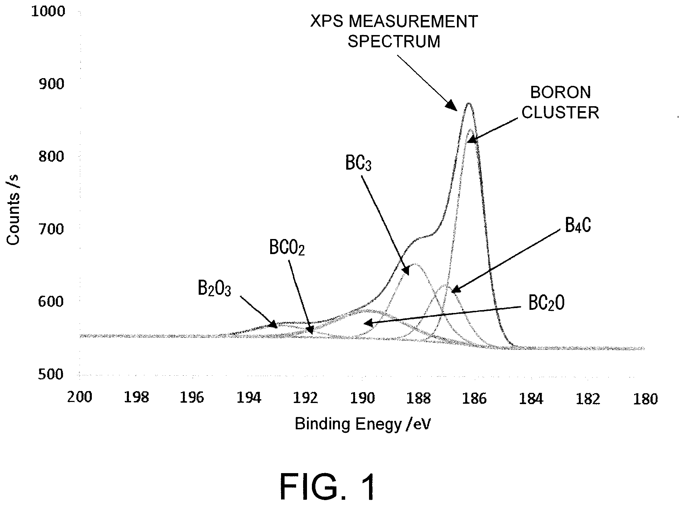

It is known that the B1s spectrum of boron obtained by XPS measurement appears in a binding energy range (near 185 to 197 eV) of B1s electrons of boron, and is roughly divided into four components. Fig. 1 is a diagram showing an example of B1s spectrum peaks and peak separation in XPS. As shown in Fig. 1, regarding the value (peak top) of the binding energy of each component, the boron cluster appears at 186 to 187 eV, boron carbide ($B_4C$) appears at 187 to 188 eV, boron ($BC_3$) doped to replace carbon with a hexagonal network plane as a basic skeleton appears at 188 to 189.3 eV, and among various boron oxides, $BC_2O$ appears at 189.5 to 190.5 eV, $BCO_2$ appears at 191.5 to 192 eV, and $B_2O_3$ appears at 192.5 to 193 eV. When these peaks overlap, each component is optimized using a Gaussian function with a peak intensity, a peak position, and a peak full width at half maximum as parameters, and fitting is performed to separate the peaks to obtain the ratio. Therefore, it is possible to perform peak separation of B1s and analyze the state of boron on the surface of the boron-doped carbon material.

Therefore, the value of the binding energy of boron doped to replace carbon on the surface of the boron-doped carbon material of the present invention appears at 188 to 189.3 eV.

In addition, the ratio when the content of boron doped to replace carbon on the surface of the boron-doped carbon material is X, and the content of boron in the entire boron-doped carbon material is Y is preferably X/Y<0.8, more preferably X/Y<0.6, still more preferably 0.01<X/Y<0.4, and yet more preferably 0.02<X/Y<0.2. When X/Y is in the range of 0.8 or more, introduction of excess holes reduces the conductivity, much local energy is required in order to bind boron onto the surface of the carbon material and/or cause a substitution reaction, and a basic skeleton such as a hexagonal network plane of the carbon material is partially destroyed. Therefore, in the range of X/Y<0.8, favorable conductivity can be exhibited.

The data obtained by the above XPS measurement relates to the surface of the carbon material, and it is said that a general depth resolution is about several nm, up to 10 nm at maximum. On the other hand, the data obtained by ICP measurement relates to the entire carbon material, and the amount of boron calculated by XPS measurement is different from the amount of boron calculated by ICP measurement.

That is, the carbon material of the present invention is a carbon material having a carbon hexagonal network plane as a basic skeleton and doped with boron to replace carbon, and when the content of boron in the entire carbon material is within a predetermined amount range, and the content of boron doped to replace carbon on the surface of the carbon material with respect to the content of boron in the entire carbon material is less than a predetermined value, excellent conductivity is exhibited.

In addition, since the conductive composition using the carbon material of the present invention not only has excellent dispersion but also improves durability against an external force such as impact during dispersion, damage to the carbon material can be reduced and superior conductivity can be exhibited.

In addition, the boron-doped carbon material of the present invention is a carbon material having a carbon hexagonal network plane as a basic skeleton, and which can be confirmed by Raman spectrum measurement and X-ray diffraction measurement.

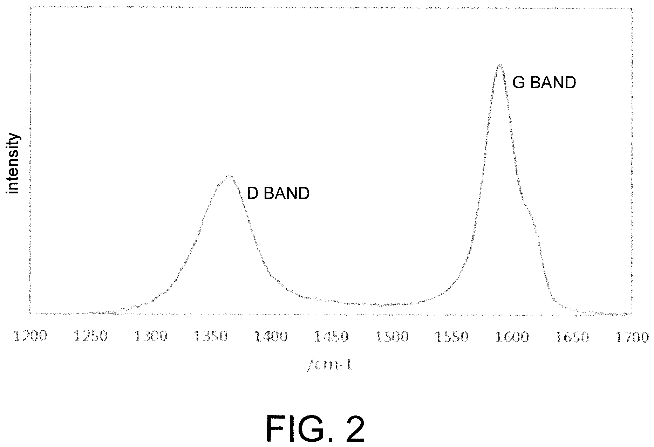

Fig. 2 is a diagram showing peaks of a G band and a D band of a carbon material in a laser Raman spectrum. In Raman spectrum measurement, for example, by confirming a G band (1,560 to 1,620 cm$^{-1}$) with an excitation laser wavelength of 532 nm, it can be confirmed that it is a carbon material having a carbon hexagonal network plane as a basic skeleton. In addition, when the intensity ratio (G/D ratio) with the D band (1,330 to 1,370 cm$^{-1}$) representing defects in the carbon material is high, the degree of crystallinity of the boron-doped carbon material is high and the conductivity is also high. The G/D ratio is preferably 1 or more, more preferably 1.7 or more, and still more preferably 2.0 or more.

In addition, when the Raman shift of the G band in the laser Raman spectrum with an excitation laser wavelength of 532 nm is P, and the Raman shift of the D band is Q, if the Raman shift difference [P-Q] is 226 cm$^{-1}$ or less, this is preferable because boron doping is expected to increase the number of carriers leading to improvement in conductivity. The Raman shift difference [P-Q] is preferably 218 to 226 cm$^{-1}$, and more preferably 222 to 226 cm$^{-1}$.

In X-ray diffraction (XRD) measurement, in the XRD diagram of the boron-doped carbon material obtained using CuK$\alpha$ rays as an X-ray source, a carbon material having a carbon hexagonal network plane as a basic skeleton can be confirmed by confirming the plane (002) diffraction peak appearing at a diffraction angle (2θ) of about 24.0 to 27.0°. In addition, the average interplanar distance d002 calculated from the obtained peak is preferably 0.338 nm or less, and more preferably 0.336 nm or less. The conductivity tends to be better when the average interplanar distance d002 of a general carbon material is smaller, but when the average interplanar distance d002 of the boron-doped carbon material of the present invention is 0.335 to 0.336 nm, the conductivity is excellent.

In addition, the structure (shape) of the boron-doped carbon material of the present invention is not particularly limited as long as it is a carbon material that satisfies the above conditions, and carbon materials are classified as, for example, carbon black (acetylene black, Ketjen black, furnace black, medium thermal carbon black, and graphitized carbon black), graphite, graphene nanoplatelets, graphene, carbon fibers, carbon nanotubes, carbon nanofibers, carbon nanohorns, carbon nanobrushes, activated carbon, porous carbon, nanoporous carbon and the like, and graphitized carbon black, graphite, graphene nanoplatelets, graphene, carbon fibers, carbon nanotubes, and carbon nanofibers are preferable, and graphite, graphene nanoplatelets, graphene, and carbon nanotubes are more preferable.

The average particle size of the boron-doped carbon material of the present invention is not particularly limited, and is 0.15 to 500 $\mu$m, preferably 0.5 to 100 $\mu$m, and more preferably 1 to 50 $\mu$m. In addition, the average particle size in the present invention is a particle size (D50) at which the cumulative volume percentage of particles from the smaller particle size reaches 50% in the volume particle size distribution, and is measured by a general particle size distribution meter, for example, a dynamic light scattering type particle size distribution meter ("Microtrac UPA," commercially available from Nikkiso Co., Ltd.).

The average thickness of the boron-doped carbon material of the present invention is not particularly limited.

When the carbon source is graphite, the average thickness is preferably 1 nm to 500 $\mu$m, more preferably 150 nm to 50 $\mu$m, still more preferably 500 nm to 10 $\mu$m, and particularly preferably 500 nm to 5 $\mu$m.

In addition, the average thickness in the present invention may be calculated from the average value of thicknesses randomly sampled with an optical microscope, an electron microscope or the like, or may be calculated using image analysis or the like. In order to minimize variations according to particles, it is preferable to calculate the average value from 100 or more particles.

In addition, when the carbon source is a carbon nanotube, the average outer diameter is preferably 2 nm to 500 nm, more preferably 3 nm to 250 nm, still more preferably 5 nm to 50 nm, and particularly preferably 5 nm to 25 nm.

The number of layers of carbon nanotubes is preferably 3 or more and 30 or less, and more preferably 5 or more and 20 or less.

The average outer diameter and the number of layers of carbon nanotubes in the present invention may be calculated from the average value of the outer diameters randomly sampled with an electron microscope or the like or may be calculated using image analysis or the like. In order to minimize variations according to the nanotubes, it is preferable to calculate the average value from 100 or more particles.

<Method of producing boron-doped carbon material>

A method of producing a boron-doped carbon material in the present invention is not particularly limited, and the material can be synthesized by heating a carbon source and a boron source. Specifically, the material can be synthesized by a method in which a carbon source such as inorganic carbon and a boron source such as a boron compound (boron carbide, etc.) are mixed and heated, a method in which a carbon source such as a petroleum compound (pitch, tar, coke, etc.) and a boron source such as a boron compound are mixed and heated, a method in which a carbon source such as a synthetic resin and a boron source such as a boron compound are mixed and heated, a method in which a carbon source such as an aromatic hydrocarbon gas and a boron source such as boron gas on a metal catalyst supported on a substrate are heated and subjected to chemical vapor deposition (CVD), a method in which a carbon source such as hydrocarbon gas and a boron source such as boron gas on a metal catalyst suspended by spraying or the like are heated and subjected to catalytic chemical vapor deposition (CCVD), a method in which boron ions are injected into a carbon source, or the like.

A preferable method of producing a boron-doped carbon material of the present invention is a method in which a carbon source that has been carbonized in advance is doped with boron. "Carbonization" used herein indicates a phenomenon similar to "crystallization" or "graphitization."

For example, in a method of obtaining boron-doped carbon by doping boron while carbonizing using a carbon source that is not carbonized and a boron source or in a method of using a carbon source that has been fired temporarily in advance, crystallization or graphitization may be insufficient. Therefore, a method of performing a boron doping reaction after carbonization so that boron is doped into a carbon source that has been carbonized in advance is more preferable than a method of doping boron while carbonizing because it is possible to produce a carbon material in which distribution of boron on the surface and inside of carbon particles is favorable. That is, in order to obtain a boron-doped carbon material of the present invention with which both excellent conductivity, dispersion, and durability can be achieved, selection of the carbon source, the mixed state of a carbon source and a boron source when the boron doping reaction occurs, and the like are also important.

Next, a carbon source used for producing a boron-doped carbon material will be described. The carbon source is not particularly limited, and examples thereof include an inorganic carbon source and an organic carbon source, and an inorganic carbon source is preferable.

Specific inorganic carbon sources are classified into carbon black (acetylene black, Ketjen black, furnace black, medium thermal carbon black, and graphitized carbon black), graphite, graphene nanoplatelets, graphene, carbon fibers, carbon nanotubes, carbon nanofibers, carbon nanohorns, carbon nanobrushes, activated carbon, porous carbon, nanoporous carbon and the like, and graphitized carbon black, graphite, graphene nanoplatelets, graphene, carbon fibers, carbon nanotubes, and carbon nanofibers are preferable, and graphite, graphene nanoplatelets, graphene, and carbon nanotubes are more preferable. Among the above carbon sources, depending on the type and manufacturer, the size and lamination structure of carbon hexagonal network planes vary, and various physical properties such as the crystallinity, the particle size, the shape, the BET specific surface area, the pore volume, the pore diameter, the bulk density, the DBP oil absorption, the surface acid-basicity, the surface hydrophilicity, and the conductivity, and cost are different, and thus an optimal material can be selected according to applications used and required performance.

Commercially available graphite that can be used is not particularly limited, and examples thereof include CMX, UP-5, UP-10, UP-20, UP-35N, CSSP, CSPE, CSP, CP, CB-150, CB-100, ACP, ACP-1000, ACB-50, ACB-100, ACB-150, SP-10, SP-20, J-SP, SP-270, HOP, GR-60, LEP, F#1, F#2, F#3, CGC-20, CGC-50, CGB-20, CGB-50, PAG-60, PAG-80, PAG-120, PAG-5, HAG-10W, HAG-150 and the like (commercially available from Nippon Graphite Industries, Co., Ltd.), EC1500, EC1000, EC500, EC300, EC100, EC50, and the like (commercially available from Ito Graphite Co., Ltd.), CX-3000, FBF, BF, CBR, SSC-3000, SSC-600, SSC-3, SSC, CX-600, CPF-8, CPF-3, CPB-6S, CPB, 96E, 96L, 96L-3, 90L-3, CPC, S-87, K-3, CF-80, CF-48, CF-32, CP-150, CP-100, CP, HF-80, HF-48, HF-32, SC-120, SC-80, SC-60, SC-32, RA-3000, RA-15, RA-44, GX-600, G-6S, G-3, G-150, G-100, G-48, G-30, G-50 and the like (commercially available from Chuetsu Graphite Works Co., Ltd.), SGP-100, SGP-50, SGP-25, SGP-15, SGP-5, SGP-1, SGO-100, SGO-50, SGO-25, SGO-15, SGO-5, SGO-1, SGX-100, SGX-50, SGX-25, SGX-15, SGX-5, SGX-1 and the like (commercially available from SEC Carbon, Ltd.), and 10099M, PB-99 and the like (commercially available from Nishimura Graphite Co., Ltd.).

In addition, commercially available carbon black that can be used is not particularly limited, and examples thereof include Ketjen black EC-300J, EC-600JD, Lionite EC-200L and the like (commercially available from Lion Specialty Chemicals Co., Ltd.), furnace black #2350, #2600, #3050B, #3030B, #3230B, #3400B and the like (commercially available from Mitsubishi Chemical Corporation), and acetylene black HS-100, FX-35 and the like (commercially available from Denka Co., Ltd.).

In addition, commercially available carbon nanotubes that can be used include single-walled carbon nanotubes, double-walled carbon nanotubes, multi-walled carbon nanotubes, and the like, and the present invention is not particularly limited, and examples thereof include VGCF-H, VGCF-X, and the like (commercially available from Showa Denko K.K.), carbon nanotubes (commercially available from Meijo Nano Carbon), NTP3003, NTP3021, NTP3121, NTP8012, NTP8022, NTP9012, NTP9112 and the like (commercially available from NTP), and TUBALL and the like (commercially available from OCSiAl).

In addition, commercially available graphene-based carbon that can be used is not particularly limited, and examples thereof include graphene nanoplatelets xGnP-C-300, xGnP-C-500, xGnP-C-750, xGnP-M-5, xGnP-M-15, xGnP-M-25, xGnP-H-5, xGnP-H-15, xGnP-H-25 and the like (commercially available from XGSciences).

Among these carbon sources, in consideration of the conductivity and cost, it is preferable to use graphite, graphene nanoplatelets, graphene, and carbon nanotubes, and more preferable to use graphite.

In addition, a specific organic carbon source is not particularly limited as long as it is an organic carbon raw material that is carbonized after a heat treatment and becomes carbon particles, and specific examples thereof include phenol-based resins, polyimide-based resins, polyamide-based resins, polyamideimide-based resins, polyacrylonitrile-based resins, polyaniline-based resins, phenolformaldehyde resin-based resins, polyimidazole-based resins, polypyrrole-based resins, polybenzimidazole-based resins, melamine-based resins, pitch, coke, lignite, polycarbodiimide, biomass, proteins, humic acid and the like and derivatives thereof. Among these, it is preferable to use pitch and coke, which are also used as raw materials of graphite.

Next, a boron source used for producing a boron-doped carbon material will be described. The boron source is not particularly limited, and examples thereof include boron carbide, boron oxide, boron nitride, metal boride, boron oxoacid, borane, and boron-containing organic compounds.

Specifically, boron carbide includes $B_4C(B_{12}C_3)$, $B_{12}C_2(B_6C)$, and the like, boron oxide includes $BC_2O$, $BCO_2$, $B_2O_2$, $B_2O_3$, $B_4O_3$, $B_4O_5$, and the like, boron nitride includes BN, and the like, metal boride includes $AlB_2$, CoB, FeB, $MgB_2$, NiB, $TiB_2$, and the like, boron oxoacid includes orthoboric acid, metaboric acid, tetraboric acid and the like, borane includes monoborane, diborane, decaborane, and the like, and boron-containing organic compounds include boric acid esters such as trimethyl borate and triethyl borate, substituted boranes such as triethylborane and triphenyl borane, and boronic acids such as phenylboronic acid and phenylboronic acid ester.

Raw material compositional proportions of a carbon source and a boron source for producing a boron-doped carbon material are not particularly limited as long as the material having the above boron content can be produced, and the proportion of the boron source is preferably 0.01 to 300 parts by mass, and more preferably 0.1 to 100 parts by mass with respect to 100 parts by mass of the carbon source.

The method of mixing the carbon source and boron source is not particularly limited, and dry mixing and wet mixing are preferable. In addition, as a mixing device, the following dry mixing device or wet mixing device can be used.

Examples of dry mixing devices include roll mills such as two rollers and three rollers, high speed stirrers such as a Henschel mixer and a super mixer, fluid energy grinders such as a micronizer and a jet mill, attritors, particle compounding devices "Nano Cure," "Nobilta," and "Mechano Fusion" (commercially available from Hosokawa Micron Corporation), powder surface modification devices "Hybridization system," "Mechano Micros," "Miralo" and the like (commercially available from Nara Machinery Co., Ltd.).

In addition, when a dry mixing device is used, other raw materials in the form of powder may be directly added to the base raw material powder, but in order to produce a more uniform mixture, a method of dissolving or dispersing other raw materials in a small amount of a solvent in advance, and adding aggregated particles of base raw material powders while disentangling may be used, and heating may be performed in order to further improve the treatment efficiency.

Examples of wet mixing devices include mixers such as a disper, a homomixer and a planetary mixer, homogenizers such as "Crea Mix" (commercially available from M. Technique Co., Ltd.) and "Filmix" (commercially available from PRIMIX), a paint conditioner (commercially available from Red Devil), a ball mill, sand mills such as "Dyno-Mill" (commercially available from Shinmaru Enterprises Corporation), attritors, media type dispersers such as a coball mill, wet jet mills such as "Genas PY" (commercially available from Genas), "Starburst" (commercially available from Sugino Machine Ltd.), and "Nanomizer" (commercially available from Nanomizer), medialess dispersers such as "Clear SS-5" (commercially available from M. Technique Co., Ltd.) and "Micros" (commercially available from Nara Machinery Co., Ltd.), and other roll mills, kneaders, and ultrasonic dispersers, but the present invention is not limited thereto. In addition, in some cases, it is preferable to use a wet mixing device that is treated to prevent metal contamination from the device.

For example, when a media type disperser is used, it is preferable to use a method of using a disperser with an agitator and vessel made of a ceramic or resin, or a disperser with a metal agitator and with a vessel surface treated with tungsten carbide thermal spraying, resin coating or the like. Here, as media, it is preferable to use glass beads, zirconia beads, or ceramic beads such as alumina beads. Also, when a roll mill is used, it is preferable to use a ceramic roll. The dispersing devices may be used alone or a plurality of devices may be used in combination.

In addition, when raw materials do not dissolve or disperse uniformly, in order to improve the wettability and dispersion of raw materials in a solvent, as necessary, a plurality of solvents may be used in combination, and a dispersant may be added and dispersion and mixing may be performed.

In particular, since it is difficult to uniformly mix the boron source with the carbonized (graphitized) carbon source, the mixing (contact) state of the carbon source and the boron source is important when a boron doping reaction occurs, and it is preferable to uniformly treat the carbon source and the boron source.

The conditions for heating the mixture of the carbon source and the boron source vary depending on the type and amount of the carbon source and the boron source as raw materials, are not particularly limited, the heating temperature is 1,000 to 3,200°C, preferably 1,500 to 3,000°C, and more preferably 1,800 to 2,500°C. In addition, the heating time is not particularly limited, and is 10 minutes to 72 hours, and preferably 30 minutes to 10 hours.

The atmosphere in the heat treatment process is preferably an atmosphere of an inert gas such as nitrogen or argon or vacuum in order to prevent the side reaction such as oxidation of raw materials.

In addition, the heat treatment process may be not only a one-stage treatment process with a certain atmosphere, temperature and time but also a multi-stage treatment process with an atmosphere, temperature, and temperature.

<Conductive composition>

The conductive composition of the present invention contains the above carbon material and at least one of a binder resin and a solvent. The conductive composition may contain two or more different carbon materials in combination, and as necessary, may contain a conductivity aid.

<Binder resin>

The binder resin is not particularly limited, and may include, for example, at least one type selected from the group consisting of polyurethane-based resins, polyamide-based resins, acrylonitrile-based resins, acrylic-based resins, butadiene-based resins, polyvinyl-based resins, polyvinyl butyral-based resins, polyolefin-based resins, polyester-based resins, polystyrene-based resins, EVA-based resins, polyvinylidene fluoride-based resins, polytetrafluoroethylene-based resins, silicone-based resins, polyether-based resins, and cellulose-based resins such as carboxymethyl cellulose.

The binder resins may be used alone or two or more thereof may be used in combination.

In consideration of the volume resistivity, adhesion to the substrate and durability, the binder resin preferably includes at least one selected from the group consisting of polyurethane-based resins, polyamide-based resins and polyester-based resins and more preferably includes polyurethane-based resins. The binder resin preferably softens or flows moderately when the conductive composition is printed or coated on the substrate and then pressed or heat-pressed (hereinafter referred to as (heat) press). When such a resin is used, the conductive composition flows in the thickness direction while the planar pattern shape of the coating film is maintained, the number of voids in the film is reduced, the number of contact points between carbon materials increases, and thus a conductive film having low volume resistivity can be obtained.

[Polyurethane resin]

A method of synthesizing a polyurethane resin is not particularly limited, and examples thereof include a method of reacting a polyol compound (a) and a diisocyanate (b), a method of reacting a polyol compound (a), a diisocyanate (b) and a diol compound (c) having a carboxyl group to obtain a urethane prepolymer (d) having an isocyanate group, a method of additionally reacting a polyamino compound (e) with the urethane prepolymer (d), and a method of reacting a reaction terminator as necessary in the above three methods.

As the polyol compound (a), various known polyether polyols, polyester polyols, polycarbonate polyols, polybutadiene glycols or mixtures thereof can be used as polyol components constituting the polyurethane resin.

Examples of polyether polyols include polymers or copolymers of ethylene oxide, propylene oxide, tetrahydrofuran and the like.

Examples of polyester polyols include saturated and unsaturated low-molecular-weight diols such as ethylene glycol, 1,2-propanediol, 1,3-propanediol, 1,3-butanediol, 1,4-butanediol, neopentyl glycol, pentanediol, 3-methyl-1,5-pentanediol, hexanediol, octanediol, 1,4-butylene diol, diethylene glycol, triethylene glycol, dipropylene glycol, and dimer diol, alkyl glycidyl ethers such as n-butyl glycidyl ether and 2-ethylhexyl glycidyl ethers, monocarboxylic acid glycidyl esters such as versatic acid glycidyl ester, dicarboxylic acids such as adipic acid, phthalic acid, isophthalic acid, telephthalic acid, maleic acid, fumaric acid, succinic acid, oxalic acid, malonic acid, glutaric acid, pimelic acid, suberic acid, azelaic acid, and sebacic acid, polyester polyols obtained by dehydration condensation of these anhydrides, and polyester polyols obtained by ring-opening polymerization of cyclic ester compounds.

As polycarbonate polyols, (1) a reaction product of diols or bisphenols with carbonates and (2) a reaction product of diols or bisphenols with phosgene in the presence of alkali can be used. Examples of carbonates include dimethyl carbonate, diethyl carbonate, diphenyl carbonate, ethylene carbonate, and propylene carbonate. Examples of diols include ethylene glycol, propylene glycol, dipropylene glycol, diethylene glycol, triethylene glycol, butylene glycol, 3-methyl-1,5-pentanediol, 2-methyl-1,8-octanediol, 3,3'-dimethylolheptane, polyoxyethylene glycol, polyoxypropylene glycol, propanediol, 1,3-butanediol, 1,4-butanediol, 1,5-pentanediol, 1,6-hexanediol, 1,9-nonanediol, neopentyl glycol, octanediol, butylethylpentanediol, 2-ethyl-1,3-hexanediol, cyclohexanediol, 3,9-bis(1,1-dimethyl-2-hydroxyethyl), and 2,2,8,10-tetraoxaspiro[5.5]undecane. In addition, examples of bisphenols include bisphenol A, bisphenol F, and bisphenols obtained by adding alkylene oxide such as ethylene oxide and propylene oxide to bisphenols.

The number average molecular weight (Mn) of the polyol compound is appropriately determined in consideration of the solubility of the polyurethane resin when the conductive composition is produced, the durability of the conductive film to be formed, the adhesion strength to the substrate and the like, but is generally preferably in a range of 580 to 8,000 and more preferably in a range of 1,000 to 5,000.

The polyol compounds may be used alone or two or more thereof may be used in combination. In addition, a part of the polyol compound can be replaced with low-molecular-weight diols, for example, various low-molecular-weight diols used for producing the polyol compound as long as the performance of the polyurethane resin is not impaired.

As the diisocyanate compound (b), aromatic diisocyanates, aliphatic diisocyanates, alicyclic diisocyanates, or mixtures thereof can be used. Alicyclic diisocyanates are preferable and isophorone diisocyanate is more preferable. Examples of aromatic diisocyanates include 1,5-naphthylene diisocyanate, 4,4'-diphenylmethane diisocyanate, 4,4'-diphenyldimethylmethane diisocyanate, 4,4'-benzyl isocyanate, dialkyldiphenylmethane diisocyanate, tetraalkyldiphenylmethane diisocyanate, 1,3-phenylene diisocyanate, 1,4-phenylene diisocyanate, tolylene diisocyanate, and xylylene diisocyanate.

Examples of aliphatic diisocyanates include butane-1,4-diisocyanate, hexamethylene diisocyanate, 2,2,4-trimethylhexamethylene diisocyanate, and lysine diisocyanate.

Examples of alicyclic diisocyanates include cyclohexane-1,4-diisocyanate, isophorone diisocyanate, norbornane diisocyanatomethyl, bis(4-isocyanatocyclohexyl)methane, 1,3-bis(isocyanatomethyl)cyclohexane, and methylcyclohexane diisocyanate.

Examples of diol compounds (c) having a carboxyl group include dimethylol alkanoic acids such as dimethylolacetic acid, dimethylolpropionic acid, dimethylolbutanoic acid, and dimethylolpentanoic acid, dihydroxysuccinic acid, and dihydroxybenzoic acid. In particular, in consideration of the reactivity and solubility, dimethylolpropionic acid or dimethylolbutanoic acid is preferable.

Conditions for obtaining a urethane prepolymer (d) having an isocyanate group by reacting a polyol compound (a), a diisocyanate (b), and a diol compound (c) having a carboxyl group are not particularly limited as long as the isocyanate group is excessive, and the equivalent ratio of isocyanate group/hydroxyl group is preferably in a range of 1.05/1 to 3/1, and more preferably 1.2/1 to 2/1. In addition, the reaction is generally performed at room temperature to 150°C, and additionally, preferably performed at 60 to 120°C in terms of the production time and side reaction control.

The polyamino compound (e) functions as a chain extender, and for example, in addition to ethylenediamine, propylenediamine, hexamethylenediamine, diethylenetriamine, triethylenetetramine, isophoronediamine, dicyclohexylmethane-4,4'-diamine, and norbornanediamine, amines having a hydroxyl group such as 2-(2-aminoethylamino)ethanol, 2-hydroxyethyl ethylenediamine, 2-hydroxyethyl propylenediamine, di-2-hydroxyethylethylenediamine, and di-2-hydroxypropylethylenediamine can be used. Among these, isophorone diamine is preferably used.

When a polyurethane resin is synthesized by reacting a urethane prepolymer (d) having an isocyanate group with a polyamino compound (e), a reaction terminator can be used in combination in order to adjust the molecular weight of the obtained polyurethane resin. As the reaction terminator, dialkylamines such as di-n-butylamine, dialkanol amines such as diethanolamine, and alcohols such as ethanol and isopropyl alcohol can be used.

Conditions for reacting a urethane prepolymer (d) having an isocyanate group, a polyamino compound (e), and as necessary, a reaction terminator are not particularly limited, and when free isocyanate groups at both ends of the urethane prepolymer are set as 1 equivalent, the total equivalent of amino groups in the polyamino compound (e) and the reaction terminator is preferably in a range of 0.5 to 1.3, and more preferably in a range of 0.8 to 0.995.

The weight average molecular weight of the polyurethane resin is preferably in a range of 5,000 to 200,000 in consideration of coatability and handling properties.

[Polyamide resin]

"Polyamide resin" is a general term for polymers having amide bonds obtained by various reactions such as polycondensation of a dibasic acid and diamine, polycondensation of aminocarboxylic acid, and ring-opening polymerization of lactam, and is produced from partially hydrogenated reaction products, including various modified polyamides, and polymers partially copolymerized with other monomers or a mixture of other substances such as various additives can be used.

The polyamide resin is not particularly limited, but is preferably a dimer acid-modified polyamide resin obtained by condensation polymerization of a dibasic acid containing a dimer acid as a main component and polyamines. When a dimer acid-modified polyamide resin is produced, as the dimer acid, dimer acids obtained by polymerizing natural monobasic unsaturated fatty acids contained in tall oil fatty acid, soybean oil fatty acid or the like are widely used industrially, but in principle, various dicarboxylic acids such as saturated aliphatic, unsaturated aliphatic, alicyclic, or aromatic dicarboxylic acids may be used. Examples of dimer acid commercial products include Haridimer 200, 300 (commercially available from Harima Chemicals Group, Inc.), Versadyme 228, 216, and Empol 1018, 1019, 1061, and 1062 (commercially available from Cognis). In addition, hydrogenated dimer acids can also be used, and examples of hydrogenated dimer acid commercial products include Pripol 1009 (commercially available from Croda Japan), and Empol 1008 (commercially available from Cognis).

In addition to the above dimer acid, in order to obtain a polyamide resin having appropriate flexibility, various dicarboxylic acids can be used as the dibasic acid. As the dicarboxylic acid, specifically, oxalic acid, malonic acid, (anhydrous) succinic acid, (anhydrous) maleic acid, glutaric acid, adipic acid, bimelic acid, suberic acid, azelaic acid, sebacic acid, telephthalic acid, isophthalic acid, phthalic acid, naphthalenedicarboxylic acid, 1,3- or 1,4-cyclohexanedicarboxylic acid, 1,18-octadecanedicarboxylic acid, 1,16-hexadccane dicarboxylic acid or the like is used.

In addition, a dibasic acid having a phenolic hydroxyl group can be used. When a dibasic acid having a phenolic hydroxyl group is used, the phenolic hydroxyl group can be introduced into the side chain of the polyamide resin, and used for the reaction with a curing agent.

Examples of dibasic acids having a phenolic hydroxyl group include hydroxy isophthalic acids such as 2-hydroxy isophthalic acid, 4-hydroxy isophthalic acid, and 5-hydroxyisophthalic acid, dihydroxy isophthalic acids such as 2,5-dihydroxy isophthalic acid, 2,4-dihydroxy isophthalic acid, and 4.6-dihydroxy isophthalic acid, dihydroxy telephthalic acids such as 2-hydroxy telephthalic acid, 2,3-dihydroxy telephthalic acid, and 2,6-dihydroxy telephthalic acid, hydroxyphthalic acids such as 4-hydroxyphthalic acid and 3-hydroxyphthalic acid, and dihydroxyphthalic acids such as 3,4-dihydroxyphthalic acid, 3,5-dihydroxyphthalic acid, 4,5-dihydroxyphthalic acid, and 3,6-dihydroxyphthalic acid.

In addition, acid anhydrides thereof, and for example, ester derivatives such as polybasic acid methyl ester may be exemplified.

Among these, 5-hydroxyisophthalic acid is preferable in terms of copolymerizability and ease of availability.

In addition, various monocarboxylic acids are used as necessary in order to obtain a polyamide resin having appropriate fluidity during heating. As the monocarboxylic acid, specifically, propionic acid, acetic acid, caprylic acid (octanoic acid), stearic acid, oleic acid or the like is used.

Polyamines as the reaction product when the dimer acid-modified polyamide resin is produced include, for example, various diamines such as aliphatic, alicyclic, and aromatic diamines, triamines, and polyamines.

Specific examples of diamines include ethylene diamine, propane diamine, butane diamine, triethylene diamine, tetraethylene diamine, hexamethylene diamine, p- or m-xylene diamine, 4,4'-methylene bis(cyclohexylamine), 2,2-bis-(4-cyclohexylamine), polyglycol diamine, isophorone diamine, 1,2-, 1,3- or 1,4-cyclohexane diamine, 1,4-bis-(2'-aminoethyl)benzene, N-ethylaminopiperazine, and piperazine.

In addition, examples of triamines include diethylene triamine, and examples of polyamines include triethylene tetramine, tetraethylene pentamine, and pentaethylene hexamine. In addition, a dimer diamine obtained by converting a dimerized aliphatic nitrile group and performing hydrogen reduction can be used.

In addition, examples of polyamine compounds include compounds obtained by converting carboxyl groups of a polybasic acid compound having a cyclic or acyclic hydrocarbon group having 20 to 48 carbon atoms into amino groups, and examples of commercial products include "Priamine 1071," "Priamine 1073," "Priamine 1074," and "Priamine 1075" (commercially available from Croda Japan), and "Versamine 551" (commercially available from Cognis Japan).

An alkanolamine may be used in combination with diamines. Examples of alkanolamines include ethanolamine, propanolamine, diethanolamine, butanolamine, 2-amino-2-methyl-1-propanol, and 2-(2-aminoethoxy)ethanol. In addition, a polyetherdiamine having oxygen in its skeleton can be used. This polyether can be represented by the general formula $H_2N-R^1-(RO)_n-R^2-NH_2$ (where, n is 2 to 100, $R^1$ and $R^2$ are an alkyl group or alicyclic hydrocarbon group having 1 to 14 carbon atoms, R is an alkyl group or alicyclic hydrocarbon group having 1 to 10 carbon atoms, and the alkyl group may be linear or branched). Examples of ether diamines include polyoxypropylene diamine, and commercial products thereof include Jeffamines (commercially available from Sun Techno Chemical Co., Ltd.). In addition, bis-(3-aminopropyl)-polytetrahydrofuran may be exemplified.

The above polyamines and a dimer acid or various dicarboxylic acids are heated and condensed by a general method, and various polyamide resins including dimer acid-modified polyamide resins are produced according to an amidation process with dehydration. Generally, the reaction temperature is about 100 to 300°C, and the reaction time is about 1 to 8 hours.

[Polyester resin]

The polyester resin is a polymer composed of a polycarboxylic acid and a polyhydric alcohol as monomers. A known polyester resin can be used, and specifically, in order to secure the cohesive force of the resin, the weight average molecular weight is preferably 1.000 to 100,000. In addition, in consideration of adhesion, the glass transition temperature is preferably -10°C to 200°C.

Examples of polycarboxylic acid components include aromatic dicarboxylic acids, aliphatic dicarboxylic acids, unsaturated dicarboxylic acids, and tri- or higher valent carboxylic acids, and one, two or more thereof can be selected and used. On the other hand, examples of polyhydric alcohol components include aliphatic glycol, ether glycols, and tri- or higher hydric polyalcohols, and one or more thereof can be selected and used.

Examples of polyester resin commercial products include Byron (registered trademark "Byron," commercially available from Toyobo Co., Ltd.), polyester (registered trademark "Polyester," commercially available from The Nippon Synthetic Chemical Industry Co., Ltd.), and Teslac (registered trademark "Teslac," commercially available from Hitachi Kasei Polymer Co., Ltd.).

As the binder resin, in consideration of the fluidity during heating, the volume resistivity, adhesion to the substrate, and durability, it is preferable to include vinyl polymers having at least one structure selected from the group consisting of polyether, polyester, polycarbonate and polybutadiene having a functional group that can react with an isocyanate group in the side chain. A side chain introducing method is not particularly limited, and various synthesis methods can be used for obtaining the resin.

Examples of functional groups that can react with an isocyanate group include a hydroxyl group, amino group, carboxyl group, epoxy group, N-methylol group, and N-alkoxymethyl group, and the hydroxyl group is preferable in consideration of reactivity.

The functional group that can react with an isocyanate group can be introduced into the side chain or main chain of the vinyl polymer, and the introduction method is not particularly limited, and the group can be introduced by various synthesis methods. When used in applications for which high tenacity and durability are required, it is desirable to introduce a functional group that can react with isocyanate directly into the main chain of the vinyl polymer, and thereby the crosslinking density of the resin can be improved.

The weight average molecular weight of the vinyl polymer in terms of polystyrene is preferably 5,000 to 500,000, and more preferably 10,000 to 100,000. When the weight average molecular weight is 500,000 or less, solubility in the solvent is improved, and when the weight average molecular weight is 5,000 or more, a sufficient coating strength after (heat) pressing is obtained.

For the binder resin, a curable resin that undergoes a curing (crosslinking) reaction after the binder resin is applied to a substrate can be used.

The crosslinking agent used in the curable resin is not particularly limited, and a polyisocyanate compound having two or more isocyanate groups may be exemplified. The polyisocyanate compound is not particularly limited, and but when used outdoors, it is preferable to use only an alicyclic or aliphatic compound in order to prevent the coating film from deteriorating over time.

Examples of alicyclic polyisocyanate compounds include isophorone diisocyanate, hydrogenated tolylene diisocyanate, and hydrogenated 4,4'-diphenylmethane diisocyanate.

Examples of aliphatic polyisocyanate compounds include trimethylhexamethylene diisocyanate, 4,4'-diphenylmethane diisocyanate, hexamethylene diisocyanate, and lysine diisocyanate.

Examples of aromatic polyisocyanate compounds include diphenylmethane diisocyanate, toluylene diisocyanate, naphthylene-1,5-diisocyanate, o-xylene diisocyanate, m-xylene diisocyanate, p-xylene diisocyanate, triphenylmethane triisocyanate, and polymethylene polyphenyl isocyanate.

As the polyisocyanate compound, both-end isocyanate adducts, biuret modified products, and isocyanurate modified products of the above compound and glycols or diamines may be used.

In particular, when the polyisocyanate compound contains an isocyanurate modified product, particularly an isocyanurate ring-containing triisocyanate, this is preferable because a sufficient coating strength can be obtained after heat pressing. Specific examples of isocyanurate ring-containing triisocyanates include isocyanurate-modified isophorone diisocyanates (for example, Desmodur Z4470, commercially available from Sumitomo Bayer Urethane Co., Ltd.), isocyanurate-modified hexamethylene diisocyanates (for example, Sumidur N3300, commercially available from Sumitomo Bayer Urethane Co., Ltd.), and isocyanurate-modified toluylene diisocyanates (for example, Sumidur FL-2, FL-3, FL-4, and HLBA, commercially available from Sumitomo Bayer Urethane Co., Ltd.).

According to the required performance, the polyisocyanate compounds may be used alone or two or more thereof may be used in combination at a ratio at which the total number of isocyanate groups is preferably 0.1 times to 5.0 times, more preferably 0.5 times to 3.0 times, and particularly preferably 0.8 to 2.0 times the total number of binder resin functional groups.

The binder resin may be in the form of a solubility resin that dissolves in a solvent or dispersed fine resin particles (emulsion) that do not dissolve in a solvent but exist in the form of fine particles.

The particle structure of the dispersed fine resin particles may be a multilayer structure, so-called core-shell particles. For example, when the resin obtained by mainly polymerizing monomers having a functional group in the core part or shell part is localized, and a difference is provided in the Tg or composition between the core and the shell, it is possible to improve the curability, drying properties, film-forming properties, and mechanical strength of the binder. In consideration of adhesion and particle stability, the average particle size of the fine resin particles is preferably 10 to 1,000 nm and more preferably 10 to 300 nm. In addition, when a large amount of coarse particles exceeding 1 $\mu$m is contained, the particle stability is impaired, and thus an amount of coarse particles exceeding 1 $\mu$m is preferably 5% or less at most.

Here, the average particle size indicates a volume average particle size, and can be measured by a dynamic light scattering method. The average particle size can be measured by the dynamic light scattering method as follows. According to the solid content of fine resin particles, 200- to 1,000-fold dilution may be performed with the same dispersion liquid as the dispersion medium. About 5 ml of the diluted dispersion liquid is injected into a cell of a measurement device (Nanotrac, commercially available from Nikkiso Co., Ltd.), and measurement is performed after the dispersion medium and the resin refractive index conditions are input according to the sample. Measurement can be performed according to the peak of volume particle size distribution data (histogram) obtained in this case.

It is preferable that the dispersed fine resin particles include cross-linked fine resin particles. Cross-linked fine resin particles indicate fine resin particles having an internal crosslinked structure (3D crosslinked structure), and it is important that particles be internally cross-linked. In addition, when cross-linked fine resin particles contain a specific functional group, it is possible to contribute to adhesion to the substrate. In addition, a coating film having excellent durability can be obtained by adjusting the amount of the crosslinked structure and the functional groups.

In consideration of an environmental impact and the like, an aqueous solvent, a water-soluble resin and aqueous fine resin particles that can be preferably used in water are preferable. In addition, in consideration of slurry stability and coatability of the conductive composition and the like, it is more preferable to use a water-soluble resin and an aqueous fine resin particle in combination.

[Water-soluble resin]

The water-soluble resin is a resin that can be completely dissolved in water without separation or precipitation after 1 g of the resin is added to 99 g of water at 25°C, stirred, and left at 25°C for 24 hours. Since the water-soluble resin has an effect of improving dispersion of the carbon material, a stable composition can be obtained with a small amount of the resin.

The water-soluble resins are broadly classified into anionic resins, cationic resins, amphoteric resins having both anionic and cationic properties and other nonionic resins, and these resins may be composed of a plurality of monomers. In addition, the water-soluble resins may be used alone or two or more thereof may be used in combination.

Examples of anionic resins include resins containing carboxyl groups, sulfo groups, phosphate groups and skeletons obtained by neutralizing some or all of these groups. Examples thereof include homopolymers of polymerizable monomers such as (meth)acrylic acid, itaconic acid, fumaric acid, maleic acid, 2-sulfoethyl methacrylate, and 2-methacryloyloxyethyl acid phosphate, copolymers with other polymerizable monomers, carboxymethyl cellulose, and alkaline neutralized products thereof.

Examples of cationic resins include resins containing cyclic amino groups, skeletons obtained by neutralizing some or all of amino groups, and quaternary ammonium salts. Examples thereof include homopolymers of polymerizable monomers such as N,N-dimethylaminoethyl (meth)acrylate, and N,N-diethyl (meth)acrylate, vinyl pyridine, copolymers with other polymerizable monomers, and acid-neutralized products thereof.

Examples of amphoteric resins include resins containing both the anionic skeleton and the cationic skeleton. Examples thereof include copolymers of styrene-maleic acid-N,N-dimethylaminoethyl (meth)acrylate.

The nonionic resins are resins other than the anionic, cationic and amphoteric resins. Examples thereof include polyvinylpyrrolidone, polyvinyl alcohol, polyvinyl butyral, polyacrylamide, poly-N-vinylacetamide, and polyalkylene glycol.

The molecular weight of the water-soluble resin is not particularly limited, and the mass average molecular weight is preferably 5,000 to 2,500,000. The mass average molecular weight (Mw) indicates a polyethylene oxide equivalent molecular weight in gel permeation chromatography (GPC).

[Aqueous fine resin particle]

Aqueous fine resin particles (aqueous emulsion) are dispersed fine resin particles in which the resin does not dissolve in water and exist in the form of fine particles, and examples thereof include (meth)acrylic emulsions, nitrile emulsions, urethane emulsions, polyolefin emulsions, fluorine emulsions (polyvinylidene fluoride (PVDF), polytetrafluoroethylene (PTFE), etc.), and diene emulsions (styrene·butadiene rubber (SBR), etc.). Here, (meth)acrylic refers to methacrylic or acrylic.

When a conductive composition containing aqueous fine resin particles is formed into a coating film, it is possible to provide a coating film having excellent adhesion between particles and to the substrate and having a high strength. In addition, since the adhesion is excellent, a small amount of aqueous fine resin particles is required, and as a result, the conductivity of the conductive composition is improved. In order to obtain the effects described above, the aqueous fine resin particles are preferably (meth)acrylic emulsions or urethane emulsions having excellent adhesion between particles and flexibility (film flexibility).

The (meth)acrylic emulsion is an emulsion polymer containing 10 parts by mass or more of monomers having a (meth)acryloyl group, and may contain preferably 20 parts by mass or more, and more preferably 30 parts by mass or more. Since monomers having an acryloyl group have excellent reactivity, fine resin particles can be relatively easily produced. Therefore, as aqueous fine resin particles, (meth)acrylic emulsions are particularly preferable.

<Solvent>

In the conductive composition of the present invention, a solvent can be appropriately used when the carbon material is dispersed or when the carbon material and the binder resin are uniformly mixed. Such a solvent is not particularly limited as long as it can dissolve the resin or can stably disperse fine resin particle emulsions, and water and an organic solvent may be exemplified.

As the organic solvent, an appropriate solvent can be used according to the composition of the conductive composition selected from among alcohols such as methanol, ethanol, propanol, butanol, ethylene glycol methyl ether, and diethylene glycol methyl ether, ketones such as acetone, methyl ethyl ketone, methyl isobutyl ketone, and cyclohexanone, ethers such as tetrahydrofuran, dioxane, ethylene glycoldimethyl ether, and diethylene glycoldimethyl ether, hydrocarbons such as hexane, heptane, and octane, aromatics such as benzene, toluene, xylene, and cumene, and esters such as ethyl acetate and butyl acetate.

In addition, the solvent may be used in a combination of water and an organic solvent or may be used in a combination of two or more organic solvents.

When water-soluble resins or aqueous fine resin particles are used, in consideration of the solubility and dispersion, it is preferable to use water as a solvent, and as necessary, a liquid medium compatible with water may be added. As the liquid medium compatible with water, an alcohol-based solvent having 4 or less carbon atoms is preferable.

In addition, as necessary, various additives such as UV absorbers, UV stabilizers, radical scavengers, fillers, thixotropy imparting agents, anti-aging agents, antioxidants, antistatic agents, flame retardants, thermal conductivity modifiers, plasticizers, anti-sagging agents, antifouling agents, preservatives, disinfectants, defoaming agents, leveling agents, anti-blocking agents, curing agents, thickeners, dispersants, and silane coupling agents may be added to the resin composition of the present invention as long as the effects of the present invention are not impaired.

<Two or more different carbon materials>

As described above, the conductive composition of the present invention may contain two or more different carbon materials selected from among the carbon materials of the present invention.

The combination of two or more different carbon materials is not particularly limited, and is preferably a combination of two or more carbon materials having different specific surface areas; a combination of two or more carbon materials with different carbon types such as graphite and carbon black, graphite and carbon nanotubes, and graphite and graphene (graphene nanoplatelets); or a combination thereof.

When two or more carbon materials having different specific surface areas are used in combination, the specific surface area of the carbon material having the largest specific surface area is preferably 5 to 1,500 $m^2/g$, more preferably 20 to 1,300 $m^2/g$, and still more preferably 110 to 900 $m^2/g$.

Since the conductive film formed from the conductive composition containing two or more different carbon materials of the present invention is a conductive film that is uniform, has a high packing property between carbon materials, and has a high density, it is speculated that the conductive network between carbon materials in the film and the durability of the conductive film are improved. In addition, when two or more carbon materials are used in combination, the wettability is improved, the interaction with the binder resin changes, the binder resin becomes less likely to cover the surface of the carbon material, and thus it is speculated that the binder resin is less likely to be present at contact points between the carbon materials, and the contact resistance of the carbon material is reduced. In addition, when two or more carbon materials are used combination, the viscosity tends to decrease due to improvement in dispersion, an effect of facilitating handling of the dispersion is observed, and the coatability is also improved.

It is speculated that, due to these effects, when two or more different carbon materials are used, a conductive film having superior conductivity can be formed.

<Conductivity aid>

The conductive composition of the present invention may further contain, as necessary, a conductivity aid other than the carbon material of the present invention. The conductivity aid may be any aid that does not correspond to the specific boron-doped carbon material of the present invention, and examples thereof include carbon aids such as carbon black, activated carbon, graphite, conductive carbon fibers (carbon nanotubes, carbon nanofibers, etc.), carbon nanohorn, graphene, graphene nanoplatelets, and nanoporous carbon and metal aids such as metal nanoparticles (silver, copper, etc.). The conductivity aid may contain boron or may be doped with boron.

In consideration of the specific surface area and particle size, carbon black is preferable as the conductivity aid. Here, regarding materials that can be used as a carbon aid, carbon black, activated carbon, graphite, conductive carbon fibers (carbon nanotubes, carbon nanofibers, etc.), carbon nanohorn, graphene, graphene nanoplatelets, and nanoporous carbon described above can be used.

It is preferable that the conductivity aid have a larger specific surface area than the carbon material of the present invention, which is a main conductive agent. The specific surface area of the conductivity aid is preferably 5 to 1,500 $m^2/g$, more preferably 20 to 1,300 $m^2/g$, and still more preferably 110 to 900 $m^2/g$. When the specific surface area of the conductivity aid is 1,500 $m^2/g$ or less, the dispersion of the conductive composition is favorable, and when the specific surface area is 5 $m^2/g$ or more, the gaps between the main conductive agents in the conductive film can be efficiently filled, and a conductive film having excellent conductivity and durability can be obtained.

Here, the specific surface area of the present invention indicates a specific surface area (BET) obtained from the nitrogen adsorption amount.

A proportion of the boron-doped carbon material of the present invention with respect to a total solid content of the conductive composition is preferably 50 to 99 mass%, and more preferably 50 to 80 mass%. When the proportion of the boron-doped carbon material is 50 mass% or more, the number of contact points between the carbon materials in the conductive film increases, and favorable conductivity is obtained. On the other hand, when the proportion of the boron-doped carbon material is 99 mass% or less, this is preferable because the durability such as adhesion of the conductive film does not decrease.

When two or more different boron-doped carbon materials are used in combination, the proportion of the boron-doped carbon material having the largest specific surface area with respect to a total solid content of the conductive composition is preferably 1 to 40 mass%, more preferably 5 to 30 mass%, and still more preferably 10 to 20 mass%.

When the conductive composition further contains a conductivity aid, the proportion of the boron-doped carbon material of the present invention with respect to a total solid content of the conductive composition is preferably 40 to 90 mass%, more preferably 45 to 80 mass%, and still more preferably 50 to 60 mass%.

On the other hand, the proportion of the conductivity aid with respect to a total solid content of the conductive composition is preferably 1 to 40 mass%, more preferably 5 to 30 mass%, and still more preferably 10 to 20 mass%.

The viscosity of the conductive composition can be appropriately adjusted by a conductive composition coating method, and is generally preferably 10 mPa·s or more and 30,000 mPa·s or less. The viscosity can be measured using, for example, a B-type viscometer.

Regarding the viscosity of the dispersion containing a boron-containing carbon aid as a conductivity aid, since the surface state of the carbon aid has changed as described above, compared to when a dispersion is produced as a boron-free carbon aid, the viscosity tends to decrease, and an effect of facilitating handling of the dispersion is observed.

(Disperser/mixer)

As devices used when a conductive composition is obtained, dispersers and mixers that are generally used for pigment dispersion and the like can be used.

Examples thereof include mixers such as a disper, a homomixer, and a planetary mixer; homogenizers such as "Crea Mix" (commercially available from M. Technique Co., Ltd.) and "Filmix" (commercially available from PRIMIX); media type dispersers such as a paint conditioner (commercially available from Red Devil), a ball mill, sand mills ("Dyno-Mill," commercially available from Shinmaru Enterprises Corporation), attritors, pearl mill ("DCP mill," commercially available from Nippon Eirich Co., Ltd.), and a coball mill; medialess dispersers such as wet jet mills ("Genas PY," commercially available from Genas, "Starburst," commercially available from Sugino Machine Ltd., and "Nanomizer," commercially available from Nanomizer), "Clear SS-5" (commercially available from M. Technique Co., Ltd.), and "MICROS" (commercially available from Nara Machinery Co., Ltd.); and other roll mills, kneaders, ultrasonic dispersers, but the present invention is not limited thereto.

For example, when a media type disperser is used, it is preferable to use a method of using a disperser with an agitator and vessel made of a ceramic or resin, or a disperser with a metal agitator and with a vessel surface treated with tungsten carbide thermal spraying, resin coating or the like. Here, as media, it is preferable to use glass beads, zirconia beads, or ceramic beads such as alumina beads. The dispersing devices may be used alone or a plurality of devices may be used in combination.

<Conductive film>

The conductive film of the present invention is a film formed from the conductive composition, and can be formed by applying a conductive composition onto a substrate, and drying it as necessary.

(Substrate)

The shape of the substrate used for molding a conductive film is not particularly limited, and can be appropriately selected according to applications. The substrate is preferably a sheet or more preferably an insulating resin film.

The material of the substrate is not particularly limited, and examples thereof include polyethylene terephthalate (PET), polyethylene naphthalate (PEN), polyimide, polyvinyl chloride, polyamide, nylon, oriented polypropylene (OPP), and casting polypropylene (CPP).

In addition, regarding the shape, generally, a flat film is used, but substrates with roughened surfaces, primer-treated substrates, perforated substrates, and mesh-like substrates can also be used.

A method of applying a conductive composition onto a substrate is not particularly limited and known methods can be used. Examples of such a coating method include a die coating method, a dip coating method, a roll coating method, a doctor coating method, a knife coating method, a spray coating method, a gravure coating method, a screen printing method, and an electrostatic coating method. Examples of drying methods include standing drying, drying with air, drying with hot air, heating with infrared rays, and heating with far-infrared rays, but the present invention is not particularly limited thereto.

In addition, after application, a rolling treatment may be performed using a lithographic press, a calendar roll or the like. In order to soften the conductive film and make it easier to press, the rolling treatment may be performed while heating.

The thickness of the conductive film is generally 0.1 μm or more and 1 mm or less, and preferably 1 μm or more and 200 μm or less.

(Volume resistivity of conductive film)

The volume resistivity of the conductive film of the present invention is preferably less than $5 \times 10^{-3}$ Ω·cm, more

preferably less than $2 \times 10^{-3}$ Ω·cm and still more preferably less than $1 \times 10^{-3}$ Ω·cm. When the volume resistivity is less than $5 \times 10^{-3}$ Ω·cm, the composition can be used as a composition having very high conductivity for battery electrodes, current collectors, batteries, wirings of electronic devices and the like.

<Electric storage device>

When the conductive composition of the present invention contains an active material or the like as necessary, it can be used as a composition for forming a positive electrode or negative electrode for an electric storage device. Here, an electric storage device can be obtained using at least one of the positive electrode and the negative electrode formed from the composition for forming the positive electrode or the negative electrode.

Examples of such an electric storage device include secondary batteries and capacitors. Examples of secondary batteries include a lithium ion secondary battery, a sodium ion secondary battery, a magnesium secondary battery, an alkaline secondary battery, a lead storage battery, a sodium sulfur secondary battery, and a lithium air secondary battery. Examples of capacitors include an electric double layer capacitor and a lithium-ion capacitor.

The structure of the secondary battery and the capacitor is not particularly limited, but is generally composed of a positive electrode and a negative electrode, and a separator provided as necessary, and various shapes such as a paper shape, a cylindrical shape, a button shape, and a laminate shape can be selected according to the purpose of use.

[Mixture ink]

Next, as a composition for forming the positive electrode or negative electrode for the electric storage device, a mixture ink essentially containing an active material, which is one of preferable embodiments, will be described.

The mixture ink includes a positive electrode mixture ink and a negative electrode mixture ink, and contains an active material for a positive electrode or a negative electrode in a conductive composition, and as necessary, further contains a binder resin, a solvent, and other additives.

(Active material)

A positive electrode active material for a lithium ion secondary battery is not particularly limited, and metal compounds such as metal oxides and metal sulfides that can be doped or intercalated with lithium ions, conductive polymers and the like can be used.

Examples thereof include oxides of transition metals such as Fe, Co, Ni, and Mn, composite oxides with lithium, and inorganic compounds such as transition metal sulfide. Specific examples thereof include transition metal oxide powders such as $MnO$, $V_2O_5$, $V_6O_{13}$, and $TiO_2$, composite oxide powders of lithium and transition metals such as lithium nickelate, lithium cobalt oxide, and lithium manganite which have a layered structure, a ternary active material which is a composite oxide of three components including nickel, cobalt, and manganese, and lithium, lithium manganite having a spinel structure, a lithium iron phosphate material which is a phosphate compound having an olivine structure, and transition metal sulfide powders such as $TiS_2$ and FeS.

In addition, conductive polymers such as polyaniline, polyacetylene, polypyrrole, and polythiophene can be used. In addition, the above inorganic compound and organic compound may be used in combination.

A negative electrode active material for a lithium ion secondary battery is not particularly limited as long as it can be doped or intercalated with lithium ions. Examples thereof include metal Li and alloys such as tin alloys, silicon alloys, and lead alloys which are alloys thereof, metal oxides such as $Li_xFe_2O_3$, $Li_xFe_3O_4$, $Li_xWO_2$, lithium titanate, lithium vanadate, and lithium silicate, conductive polymers such as polyacetylene and poly-p-phenylene, amorphous carbon materials such as soft carbon and hard carbon, artificial graphite such as highly graphitized carbon materials or carbonaceous powder such as natural graphite, and carbon-based materials such as carbon black, mesophase carbon black, resin-fired carbon materials, vapor-grown carbon fibers, and carbon fibers. These negative electrode active materials may be used alone or two or more thereof may be used in combination.

In addition, as a positive electrode active material and a negative electrode active material for an alkaline secondary battery, conventionally known materials can be appropriately selected.

Electrode active materials for electric double layer capacitors are not particularly limited, and examples thereof include activated carbon, polyacene, carbon whisker and graphite, and powders or fibers thereof can be used. A preferable electrode active material for an electric double layer capacitor is activated carbon, and specifically activated carbon obtained by activating phenol, coconut husk, rayon, acrylic, coal/petroleum pitch coke, mesocarbon microbeads (MCMB) or the like.

The positive electrode active material for a lithium-ion capacitor is not particularly limited as long as it is a material that can reversibly dope and de-dope lithium ions and anions, and examples thereof include activated carbon powder.

The negative electrode active material for a lithium-ion capacitor is not particularly limited as long as it is a material that can reversibly dope and de-dope lithium ions, and examples thereof include graphite-based materials such as artificial graphite and natural graphite.

(Binder resin)

For the binder resin that the mixture ink may contain, description in the above section <Binder resin> can be used. In addition, examples of binder resins include acrylic resins, polyurethane resins, polyester resins, phenolic resins, epoxy resins, phenoxy resins, urea resins, melamine resins, alkyd resins, formaldehyde resins, silicon resins, fluorine resins, and cellulose resins such as carboxymethyl cellulose, synthetic rubber such as styrene-butadiene rubber and fluorine rubber, conductive resins such as polyaniline and polyacetylene, and polymer compounds containing fluorine atoms such as polyvinylidene fluoride, polyvinyl fluoride, and tetrafluoroethylene, and modified products, mixtures, or copolymers of these resins. These binders may be used alone or two or more thereof may be used in combination.

In addition, the mixture ink may contain, as necessary, a dispersant, a film forming aid, a defoaming agent, a leveling agent, a preservative, a pH adjusting agent, a viscosity adjusting agent or the like.

The viscosity of the mixture ink can be appropriately adjusted by a coating method, and is generally preferably 100 mPa·s or more and 30,000 mPa·s or less in a solid content range of 30 to 90 mass%.

In the viscosity range in which coating is possible, it is preferable that the content of the active material be as large as possible, and the proportion of the active material with respect to a solid content of the mixture ink is preferably 80 to 99 mass%. In addition, the proportion of the carbon material of the present invention with respect to a solid content of the mixture ink is preferably 0.01 to 15 mass%.

(Disperser/mixer)

As devices used when a mixture ink is obtained, dispersers and mixers that are generally used for pigment dispersion and the like can be used.

[Electrode]

At least one electrode of the positive electrode and the negative electrode used for the electric storage device can be obtained by applying the mixture ink onto a current collector and drying it to form a mixture layer.

(Current collector)

The material and shape of the current collector used for the electrode are not particularly limited, and those suitable for various electric storage devices can be appropriately selected. Examples of materials of current collectors include metals such as aluminum, copper, nickel, titanium, and stainless steel, and alloys. In the case of lithium ion batteries, aluminum is preferable as the positive electrode material, and copper is preferable as the negative electrode material.

[Electrolytic solution]

As the electrolytic solution, known electrolytic solutions can be appropriately selected and used. Examples of electrolytic solutions used for lithium ion secondary batteries include those obtained by dissolving an electrolyte containing lithium in a non-aqueous solvent.

The electrolyte is not particularly limited, and examples thereof include $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, and $LiBPh_4$.

The non-aqueous solvent is not particularly limited, and examples thereof include carbonates such as ethylene carbonate, propylene carbonate, butylene carbonate, dimethyl carbonate, ethyl methyl carbonate, and diethyl carbonate; lactones such as γ-butyrolactone, γ-valerolactone, and γ-octanoic lactone; glymes such as tetrahydrofuran, 2-methyl tetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile.

These solvents may be used alone or two or more thereof may be used in combination.

In addition, the electrolytic solution can be retained in a polymer matrix to form a gel-like polymer electrolyte. Examples of polymer matrixes include acrylate-based resins having polyalkylene oxide segments, polyphosphazen-based resins having polyalkylene oxide segments and polysiloxanes having polyalkylene oxide segments, but the present invention is not limited thereto.

In addition, a solid electrolyte can be used in place of the electrolytic solution as long as it can conduct ions. Such a solid electrolyte is not particularly limited, and examples thereof include oxide-based solid electrolytes and sulfide-based solid electrolytes.

[Separator]

Examples of separators include polyethylene nonwoven fabric, polypropylene nonwoven fabric, and polyamide non-woven fabric and these may be subjected to a hydrophilic treatment, but the present invention is not particularly limited thereto. Examples

Hereinafter, the present invention will be described in more detail with reference to examples. Here, parts and % indicate parts by mass and mol% unless otherwise specified.

<Production of carbon material>

[Example A1]

84 parts of granular natural graphite CGB-20 (commercially available from Nippon Graphite Industries, Co., Ltd.) as a carbon source, and 16 parts of boric acid (commercially available from FUJIFILM Wako Pure Chemical Corporation) as a boron source were dry-mixed using a ball mill to produce a precursor (1).

Next, a graphite crucible was filled with the precursor (1) and heated in a firing furnace under an argon atmosphere at 2,100°C for 1 hour to obtain a carbon material (1).

[Example A2]

15 parts of boric acid as a boron source was dissolved in 30 parts of water as a solvent and 270 parts in ethanol, and 85 parts of granular natural graphite CGB-50 (commercially available from Nippon Graphite Industries, Co., Ltd.) as a carbon source was then added thereto, and the mixture was stirred using a planetary mixer and wet-mixed. Then, the solvent was volatilized at 80°C to produce a precursor (2).

Next, a graphite crucible was filled with the precursor (2) and heated in a firing furnace under an argon atmosphere at 2,100°C for 1 hour to obtain a carbon material (2).

[Examples A3 to A7 and Comparative Examples A1 to A3]

Using raw materials and conditions shown in Table 1, when raw materials were dry-mixed in the same manner as in Example A1, and when raw materials were wet-mixed in the same manner as in Example A2, carbon materials (3) to (10) were produced.

[Comparative Example A4]

100 parts of multi-layer graphene (graphene nanoplatelets) xGnP-C-750 (commercially available from XG Sciences) as a carbon source was doped with boron ionized using an ion injecting device to obtain a carbon material (11).

<Evaluation of carbon material>

The above carbon materials were evaluated as follows. Table 2 shows the results.

(Content of boron on surface of carbon material)

Using XPS (K-Alpha, commercially available from Thermo Fisher scientific), the content (%) of boron on the surface of the carbon material was measured.

Since the spectrum of boron 1s electrons appeared at a binding energy of 185 to 194 eV, it was possible to quantify the content of boron on the surface by obtaining the peak area. In addition, specifically, the boron cluster appeared at 186 to 187 eV, the boron carbide appeared at 187 to 188 eV, boron ($BC_3$) doped to replace carbon with a hexagonal network plane as a basic skeleton appeared at 188 to 189.3 eV, and among various boron oxides, $BC_2O$ appeared at 189.5 to 190.5 eV, $BCO_2$ appeared at 191.5 to 192 eV, and $B_2O_3$ appeared at 192.5 to 193 eV (refer to Fig. 1).

Therefore, it was possible to perform peak separation of boron 1s, and analyze the doping state of boron on the surface of the carbon material.

(Content of boron in carbon material)

Using an ICP optical emission spectrometer (SPECTROARCOS FHS12, commercially available from SPECTRO), the content (%) of boron in the carbon material was measured. The obtained value indicates the amount (%) of boron contained in the entire carbon material.

(Volume resistivity of carbon material)

The volume resistivity of the carbon material was measured using a powder resistance measurement system (MCP-PD51 model, commercially available from Mitsubishi Chemical Analytech Co., Ltd.). The volume resistivity was a value obtained when a carbon material was applied to a measurement cell and a load of 20 kN was then applied.

(Basic skeleton of carbon hexagonal network plane of carbon material)

Using an X-ray diffraction device (Smartlab, commercially available from Rigaku Corporation), according to measurement using CuK$\alpha$ rays as an X-ray source, the peak of the plane (002) derived from the graphite skeleton was confirmed near $2\theta$=24.0 to 27.0°, and it was confirmed that the carbon materials (1) to (11) and (12) to (45) had a basic skeleton of the carbon hexagonal network plane.

[Table 1]

Table 1.

| | Carbon source | Parts by mass | Boron source | Parts by mass | Solvent | Parts by mass | Mixing condition | Heat treatment condition | Carbon material |
|---|---|---|---|---|---|---|---|---|---|
| Example A1 | CGB-20 | 84 | Boric acid | 16 | None | 0 | Dry mixing | 2100°C-1 hour | (1) |
| Example A2 | CGB-50 | 85 | Boric acid | 15 | Water/ ethanol | 30/270 | Wet mixing | 2100°C-1 hour | (2) |
| Example A3 | FB-150 | 99.5 | Boron carbide | 0.5 | Ethanol | 10 | Wet mixing | 21 00°C - 10 minutes | (3) |
| Example A4 | CGB-20 | 99 | Boric acid | 1 | Ethanol | 20 | Wet mixing | 2100°C- 20 minutes | (4) |
| Example A5 | CGB-50 | 60 | Boric acid | 40 | None | 0 | Dry mixing | 2000°C-1 hour | (5) |
| Example A6 | CGB-50 | 99.2 | Boric acid | 0.8 | Water | 16 | Wet mixing | 2000°C-2 hours | (6) |
| Example A7 | CGB-20 | 84 | Boron carbide | 16 | Ethanol | 1000 | Wet mixing | 2200°C- 10 hours | (7) |
| Comparative Example A1 | PAG-5 | 99.9 | Boric acid | 0.1 | Ethanol | 5 | Wet mixing | 2000°C-5 minutes | (8) |
| Comparative Example A2 | PAG-5 | 50 | Boron carbide | 50 | None | 0 | Dry mixing | 2000°C-5 hours | (9) |

(continued)

| | Carbon source | Parts by mass | Boron source | Parts by mass | Solvent | Parts by mass | Mixing condition | Heat treatment condition | Carbon material |
|---|---|---|---|---|---|---|---|---|---|
| Comparative Example A3 | xGnP-M-5 | 96 | Boric acid | 4 | None | 0 | Dry mixing | 2900°C-2 hours | (10) |
| CGB-20: Granular natural graphite, a particle size of 20 μm, commercially available from Nippon Graphite Industries, Co., Ltd. CGB-50: Granular natural graphite, a particle size of 50 μm, commercially available from Nippon Graphite Industries, Co., Ltd. FB-150: Flake natural graphite, a particle size of 50 μm, commercially available from Nippon Graphite Industries, Co., Ltd. PAG-5: Granular artificial graphite, a particle size of 50 μm, commercially available from Nippon Graphite Industries, Co., Ltd. xGnP-M-5: Multi-layer graphene (graphene nanoplatelets), a particle size of 5 μm, commercially available from XG Sciences | | | | | | | | | |

[Table 2]

Table 2.

| | Carbon material | Content of boron on surface X mol% | Content of boron in material Y mol% | X/Y | G/D | P-Q | Volume resistivity $\Omega \cdot cm$ |
|---|---|---|---|---|---|---|---|
| Example A1 | (1) | 0.110 | 2.392 | 0.046 | 1.32 | 220.9 | $5.1 \times 10^{-4}$ |
| Example A2 | (2) | 0.175 | 1.065 | 0.164 | 1.68 | 221.7 | $3.2 \times 10^{-4}$ |
| Example A3 | (3) | 0.103 | 0.131 | 0.786 | 1.56 | 227.2 | $7.4 \times 10^{-4}$ |
| Example A4 | (4) | 0.024 | 0.05 | 0.480 | 1.96 | 228.9 | $6.1 \times 10^{-4}$ |
| Example A5 | (5) | 0.363 | 6.891 | 0.053 | 1.28 | 218.6 | $5.9 \times 10^{-4}$ |
| Example A6 | (6) | 0.007 | 0.009 | 0.778 | 1.67 | 230.4 | $9.0 \times 10^{-4}$ |
| Example A7 | (7) | 1.230 | 14.70 | 0.084 | 0.82 | 216.7 | $8.5 \times 10^{-4}$ |
| Comparative Example A1 | (8) | 0 | 0.003 | 0.000 | 1.58 | 232.5 | $4.1 \times 10^{-3}$ |
| Comparative Example A2 | (9) | 0.721 | 15.33 | 0.047 | 0.69 | 217.4 | $3.2 \times 10^{-3}$ |
| Comparative Example A3 | (10) | 0.045 | 0.051 | 0.882 | 0.93 | 227.5 | $2.8 \times 10^{-3}$ |
| Comparative Example A4 | (11) | 0.253 | 0.188 | 1.347 | - | - | $6.3 \times 10^{-3}$ |

[Example A8]

According to the method described in paragraph [0147] and paragraph [0148] in Japanese Patent Laid-Open No. 2019-108256, a catalyst (1) for carbon nanotube (CNT) synthesis was produced. Then, a quartz glass heat-resistant plate on which 1 g of the catalyst for CNT synthesis was dispersed was placed on a center part of a horizontal reaction tube having an internal volume of 10 L, which could be pressurized and heated by an external heater. Discharging was performed while nitrogen gas was injected, the air in the reaction tube was replaced with nitrogen gas, and heating was performed until the atmosphere temperature in the horizontal reaction tube reached 700°C. After the temperature reached 700°C, ethylene gas as a hydrocarbon was introduced into the reaction tube at a flow rate of 2 L/min and a contact reaction was performed for 15 minutes. After the reaction was completed, the gas in the reaction tube was replaced with nitrogen gas, cooling was performed until the temperature of the reaction tube reached 100°C or lower, and removing was performed to obtain a CNT (1).

Next, 96 parts of the CNT (1) as a carbon source, 4 parts of boric acid (commercially available from FUJIFILM Wako Pure Chemical Corporation) as a boron source, 9,500 parts of NMP (N-methylpyrrolidone) as a solvent, and 400 parts of ethanol were uniformly dispersed using an ultrasonic homogenizer (Advanced Digital Sonifer (registered trademark), MODEL 450DA, commercially available from BRANSON), and then dried to produce a precursor (12). Here, in Table 3 and Table 7, the same mixing method as in the precursor (12) is denoted as a treatment (1).

Next, a graphite crucible was filled with the precursor (12) and heated in a firing furnace under an argon atmosphere at 1,750°C for 1 hour to obtain a carbon material (12).

[Examples A9 and A10]

Carbon materials (13) and (14) were produced in the same manner as in Example A8 except that raw materials and conditions shown in Table 3 were used.

[Example A11]

95 parts of the CNT (2) (multi-walled carbon nanotube 100P, commercially available from KUMHO PETROCHEMICAL) as a carbon source, 5 parts of boric acid (commercially available from FUJIFILM Wako Pure Chemical Corporation) as a boron source, 9,500 parts of NMP as a solvent, 400 parts of ethanol, and 0.9 parts of PVP(1) (polyvinylpyrrolidone, K-15, commercially available from Sigma-Aldrich) as a dispersant were uniformly dispersed using an ultrasonic homogenizer and then dried to produce a precursor (15). Here, in Table 3 and Table 7, the same mixing method as in the precursor (15) is denoted as a treatment (2).

Next, a graphite crucible was filled with the precursor (15) and heated in a firing furnace under an argon atmosphere at 1,700°C for 1 hour to obtain a carbon material (15).

[Example A12]

96.2 parts of the CNT (3) (multi-walled carbon nanotube JENOTUBE 8S, commercially available from JEIO) as a carbon source, 3.8 parts of boric acid (commercially available from FUJIFILM Wako Pure Chemical Corporation) as a boron source, 9,500 parts of NMP as a solvent, 400 parts of ethanol, and 0.8 parts of PVP(1) as a dispersant were uniformly dispersed using a ultrasonic homogenizer, the solvent was dried and compositing was then performed using a particle compounding device Mechano Fusion (commercially available from Hosokawa Micron Corporation) to produce a precursor (16). Here, in Table 3 and Table 7, the same mixing method as in the precursor (16) is denoted as a treatment (3).

Next, a graphite crucible was filled with the precursor (16) and filled in a firing furnace under an argon atmosphere at 1,700°C for 1 hour to obtain a carbon material (16).

[Example A13]

A carbon material (17) was produced in the same manner as in Example A12 except that raw materials and conditions shown in Table 3 were used.

[Comparative Example A5]

99.5 parts of the CNT (4) (carbon nanotube TUBALL, commercially available from OCSiAl) as a carbon source, and 0.5 parts of boron carbide (commercially available from FUJIFILM Wako Pure Chemical Corporation) as a boron source were mixed with an agate mortar and then filled into a graphite crucible, and heated in a firing furnace under an argon atmosphere at 2,800°C for 20 minutes to obtain a carbon material (18).

[Comparative Example A6]

A carbon material (19) was produced in the same manner as in Comparative Example A5 except that raw materials and conditions shown in Table 3 were used.

[Comparative Example A7]

A quartz glass heat-resistant plate on which 1 g of the catalyst for CNT synthesis (1) was dispersed was placed on a center part of a horizontal reaction tube having an internal volume of 10 L, which could be pressurized and heated by an external heater. Discharging was performed while nitrogen gas was injected, the air in the reaction tube was replaced with nitrogen gas, and heating was performed until the atmosphere temperature in the horizontal reaction tube reached 700°C. After the temperature reached 700°C, a mixed gas of ethylene gas and trimethyl borate gas was introduced into the reaction tube at a flow rate of 2 L/min, and a contact reaction was performed for 15 minutes. After the reaction was completed, the gas in the reaction tube was replaced with nitrogen gas, and cooling was performed until the temperature of the reaction tube reached 100°C or lower to obtain a carbon material (20).

[Comparative Example A8]

Carbon black (CB(1)) (Ketjen black EC-600JD, commercially available from Lion Specialty Chemicals Co., Ltd.) as a carbon source was doped with boron ionized using an ion injecting device to obtain a carbon material (21).
The above <Evaluation of carbon material> was performed on the above carbon materials. Table 4 shows the evaluation results.

[Table 3]

Table 3.

|  | Carbon source | Parts by mass | Boron source | Parts by mass | Solvent | Parts by mass | Dispersant | Parts by mass | Mixing method | Heat treatment condition | Carbon material |
|---|---|---|---|---|---|---|---|---|---|---|---|
| Example A8 | CNT(1) | 96 | Boric acid | 4 | NMP/ ethanol | 9500/400 | None | 0 | Treatment (1) | 1750°C -1 hour | (12) |
| Example A9 | CNT(1) | 85 | Boric acid | 15 | NMP/ ethanol | 9000/900 | None | 0 | Treatment (1) | 1750°C-1 hour | (13) |
| Example A10 | CNT(1) | 82 | Boric acid | 18 | NMP/ ethanol | 9000/900 | None | 0 | Treatment (1) | 1750°C-1 hour | (14) |
| Example A11 | CNT(2) | 95 | Boric acid | 5 | NMP/ ethanol | 9500/400 | PVP(1) | 0.9 | Treatment (2) | 1700°C -1 hour | (15) |
| Example A12 | CNT(3) | 96.2 | Boric acid | 3.8 | NMP/ ethanol | 9500/400 | PVP(1) | 0.8 | Treatment (3) | 1700°C-1 hour | (16) |
| Example A13 | CB(2) | 95 | Boric acid | 5 | NMP/ ethanol | 9500/400 | PVB | 0.8 | Treatment (3) | 1700°C-1 hour | (17) |
| Comparative Example A5 | CNT(4) | 99.5 | Boron carbide | 0.5 | None | 0 | None | 0 | Mortar mixing | 2800°C-20 minutes | (18) |
| Comparative Example A6 | CNT(5) | 70 | Boron carbide | 30 | None | 0 | None | 0 | Mortar mixing | 2800°C-1 hour | (19) |

CNT(2): Multi-walled carbon nanotubes 100P, commercially available from KUMHO PETROCHEMICAL CNT(3): Multi-walled carbon nanotubes JENOTUBE 8S. commercially available from JEIO CNT(4): Single-walled carbon nanotubes TUBALL, commercially available from OCSiAl CNT(5): Multi-walled carbon nanotubes AMC®, commercially available from Ube Industries Ltd.

CB(2): Ketjen black EC-300J, commercially available from Lion Specialty Chemicals Co., Ltd. PVP(1): Polyvinylpyrrolidone K-15, commercially available from Sigma-Aldrich PVB: S-LLC BL-10, commercially available from Sekisui Chemical Co., Ltd.

[Table 4]

Table 4.

| | Carbon material | Content of boron on surface X mol% | Content of boron in material Y mol% | X/Y | Volume resistivity Ω·cm |
|---|---|---|---|---|---|
| Example A8 | (12) | 0.074 | 0.586 | 0.126 | $2.1\times10^{-3}$ |
| Example A9 | (13) | 0.110 | 1.827 | 0.060 | $3.9\times10^{-3}$ |
| Example A10 | (14) | 0.114 | 2.081 | 0.055 | $4.5\times10^{-3}$ |
| Example A11 | (15) | 0.060 | 0.711 | 0.084 | $1.9\times10^{-3}$ |
| Example A12 | (16) | 0.120 | 0.522 | 0.230 | $2.3\times10^{-3}$ |
| Example A1 3 | (17) | 0.072 | 0.731 | 0.098 | $6.3\times10^{-3}$ |
| Comparative Example A5 | (18) | 0.31 | 0.324 | 0.957 | $8.5\times10^{-3}$ |
| Comparative Example A6 | (19) | 0.73 | 15.09 | 0.048 | $1.8\times10^{-2}$ |
| Comparative Example A7 | (20) | 0.62 | 0.71 | 0.873 | $8.4\times10^{-3}$ |
| Comparative Example A8 | (21) | 0.153 | 0.127 | 1.205 | $3.3\times10^{-2}$ |

[Example A14]

99 parts of UP-20 (natural graphite, commercially available from Nippon Graphite Industries, Co., Ltd.) as a carbon source, 1 part of boric acid (commercially available from FUJIFILM Wako Pure Chemical Corporation) as a boron source, 1,800 parts of toluene as a solvent, and 200 parts of ethanol were put into a mixer and mixed, and additionally, the mixture was put into a sand mill and dispersed.
The dispersion liquid was sampled and dispersion continued until the average thickness of the precursor carbon reached 90 nm, and the solvent was then dried to produce a precursor (22). Here, in Table 5, the same mixing method as in the precursor (22) is denoted as a treatment (4).
Next, a graphite crucible was filled with the precursor (22) and heated in a firing furnace under an argon atmosphere at 2,100°C for 1 hour to obtain a carbon material (22).

[Examples A15 and A16]

Carbon materials (23) and (24) were produced in the same manner as in Example A14 except that dispersion was performed so that the average thickness of the precursor carbon was 355 nm or 825 nm.

[Example A17]

98.8 parts of F#1 (natural graphite, commercially available from Nippon Graphite Industries, Co., Ltd.) as a carbon source, 1.2 parts of boron carbide (commercially available from FUJIFILM Wako Pure Chemical Corporation) as a boron source, 1,000 parts of toluene as a solvent, and 0.1 part of PVP(1) as a dispersant were put into a mixer and mixed, and additionally, the mixture was put into a sand mill and dispersed.
The dispersion liquid was sampled and dispersion continued until the average thickness of the precursor carbon reached 3.5 μm, and the solvent was then dried to produce a precursor (25). Here, in Table 5, the same mixing method as in the precursor (25) is denoted as a treatment (5).
Next, a graphite crucible was filled with the precursor (25) and heated in a firing furnace under an argon atmosphere at 2,000°C for 1 hour to obtain a carbon material (25).

# EP 4 129 902 A1

[Example A18]

A carbon material (26) was produced in the same manner as in Example A17 except that dispersion was performed so that the average thickness of the precursor carbon was 11.6 $\mu$m.

[Comparative Example A9]

92 parts of petroleum coke as a carbon source, and 8 parts of boron oxide (commercially available from FUJIFILM Wako Pure Chemical Corporation) as a boron source were mixed with an agate mortar and then filled into a graphite crucible, and heated in a firing furnace under an argon atmosphere at 2,800°C for 1 hour to obtain a carbon material (27).

The above <Evaluation of carbon material> and the following evaluation were performed on the above carbon materials. Table 6 shows the results.

(G/D ratio)

The G/D ratio was evaluated using a laser Raman spectrophotometer (NRS-3100, commercially available from JASCO Corporation). Measurement was performed under the condition of an excitation laser wavelength of 532 nm, and the G/D ratio was calculated from the ratio (IG/ID) of the peak intensities of the D band (1,330 to 1,370 cm$^{-1}$) and the G band (1,560 to 1,620 cm$^{-1}$) of the obtained Raman spectrums (refer to Fig. 2) of the samples.

(Raman shift difference [P-Q])

The Raman shift difference (P-Q) was evaluated using a laser Raman spectrophotometer (NRS-3100, commercially available from JASCO Corporation). Measurement was performed under the condition of an excitation laser wavelength of 532 nm, and (P-Q) was calculated from the difference between the Raman shift of the peak top of the D band (1,330 to 1,370 cm$^{-1}$) and the Raman shift of the peak top of the G band (1,560 to 1,620 cm$^{-1}$) of the obtained Raman spectrums of the samples.

[Table 5]

Table 5.

|  | Carbon source | Parts by mass | Boron source | Parts by mass | Solvent | Parts by mass | Mixing method | Dispersant. | Parts by mass | Heat treatment condition | Carbon material |
|---|---|---|---|---|---|---|---|---|---|---|---|
| Example A14 | UP-20 | 99 | Boric acid | 1 | Toluene/ethanol | 1800/200 | Treatment (4) | None | 0 | 2100°C-1 hour | (22) |
| Example A15 | UP-20 | 99 | Boric acid | 1 | Toluene/ethanol | 1800/200 | Treatment (4) | None | 0 | 2100°C-1 hour | (23) |
| Example A16 | UP-20 | 99 | Boric acid | 1 | Toluene ethanol | 1800/200 | Treatment (4) | None | 0 | 2100°C-1 hour | (24) |
| Example A17 | F#1 | 98.8 | Boron carbide | 1.2 | Toluene | 1000 | Treatment (5) | PVP(1) | 0.1 | 2000°C-1 hour | (25) |
| Example A18 | F#1 | 98.8 | Boron carbide | 1.2 | Toluene | 1000 | Treatment (5) | PVP(1) | 0.1 | 2000 C-t hour | (26) |
| Comparative Example A9 | Petroleum coke | 92 | Boron oxide | 8 | None | 0 | Mortar mixing | None | 0 | 2800°C-1 hour | (27) |
| UP-20: Natural graphite, a particle size of 20 $\mu$m, commercially available from Nippon Graphite Industries. Co., Ltd. F#1: Natural graphite, a particle size of 350 $\mu$m, commercially available from Nippon Graphite Industries. Co., Ltd. | | | | | | | | | | | |

[Table 6]

Table 6.

|  | Carbon material | Content of boron on surface X mol% | Content of boron in material Y mol% | X/Y | Thickness (nm) | G/D | P-Q | Volume resistivity $\Omega \cdot cm$ |
|---|---|---|---|---|---|---|---|---|
| Example A14 | (22) | 0.062 | 0.151 | 0.411 | 90 | 1.34 | 220.3 | $5.1 \times 10^{-4}$ |
| Example A15 | (23) | 0.061 | 0.147 | 0.415 | 350 | 1.73 | 222.5 | $4.5 \times 10^{-4}$ |
| Example A16 | (24) | 0.059 | 0.145 | 0.407 | 820 | 1.81 | 223.6 | $3.8 \times 10^{-4}$ |
| Example A17 | (25) | 0.055 | 0.7 | 0.079 | 3300 | 2.34 | 223.9 | $1.9 \times 10^{-4}$ |
| Example A18 | (26) | 0.051 | 0.67 | 0.076 | 11500 | 2.16 | 223.4 | $2.2 \times 10^{-4}$ |
| Comparative Example A9 | (27) | 0.139 | 0.168 | 0.827 | 12000 | - | - | $2.5 \times 10^{-3}$ |

[Example A19]

1.1 parts of boron carbide (commercially available from FUJIFILM Wako Pure Chemical Corporation) as a boron source, and 1,000 parts of toluene as a solvent were put into a mixer and mixed, and additionally, the mixture was put into a sand mill and dispersed, and 98.9 parts of F#1 (natural graphite, commercially available from Nippon Graphite Industries, Co., Ltd.) as a carbon source was then added thereto, and the mixture was mixed in a mixer. The solvent was dried and compositing was then performed using a particle compounding device Mechano Fusion (commercially available from Hosokawa Micron Corporation) to produce a precursor (28). Here, in Table 7, the same mixing method as in the precursor (28) is denoted as a treatment (6).
Next, a graphite crucible was filled with the precursor (28) and heated in a firing furnace under an argon atmosphere at 2,000°C for 1 hour to obtain a carbon material (28).

[Examples A20 and A34]

Carbon materials (29) and (43) were produced in the same manner as in Example A19 except that raw materials and conditions shown in Table 7 were used.

[Examples A21, A22, A25 to A30, A33, A35, and A36]

Carbon materials (30), (31), (34) to (39), (42), (44) and (45) were produced in the same manner as in Example A8 except that raw materials and conditions shown in Table 7 were used.

[Example A23]

97.5 parts of F#1 (natural graphite, commercially available from Nippon Graphite Industries, Co., Ltd.) as a carbon source, 0.5 parts of boron carbide (commercially available from FUJIFILM Wako Pure Chemical Corporation) as a boron source, 2 parts of boric acid (commercially available from FUJIFILM Wako Pure Chemical Corporation), 900 parts of toluene as a solvent, 100 parts of ethanol, and 0.1 parts of PVB (S-LEC BL-10, commercially available from Sekisui Chemical Co., Ltd.) as a dispersant were dispersed in a high shear mixer (L5M-A, commercially available from SILVERSON). The solvent was dried and compositing was then performed using a particle compounding device Mechano Fusion (commercially available from Hosokawa Micron Corporation) to produce a precursor (32). Here, in Table 7, the same mixing method as in the precursor (32) is denoted as a treatment (7).
Next, a graphite crucible was filled with the precursor (32) and heated in a firing furnace under an argon atmosphere at 2,000°C for 1 hour to obtain a carbon material (32).

[Example A24]

A carbon material (33) was produced in the same manner as in Example A23 except that raw materials and conditions shown in Table 7 were used.

[Example A31]

0.2 parts of boron carbide (commercially available from FUJIFILM Wako Pure Chemical Corporation) as a boron source and 1,000 parts of toluene as a solvent were put into a mixer and mixed, and additionally, the mixture was put into a sand mill and dispersed, and 99.8 parts of FB-150 (natural graphite, commercially available from Nippon Graphite Industries, Co., Ltd.) as a carbon source was then added thereto and the mixture was dispersed with a ultrasonic homogenizer, the solvent was then dried to produce a precursor (40). Here, in Table 7, the same mixing method as in the precursor (40) is denoted as a treatment (8).
Next, a graphite crucible was filled with the precursor (40) and heated in a firing furnace under an argon atmosphere at 2,400°C for 1 hour to obtain a carbon material (40).

[Example A32]

A carbon material (41) was produced in the same manner as in Example A31 except that raw materials and conditions shown in Table 7 were used.
The above <Evaluation of carbon material> and evaluation of (G/D ratio) and (Raman shift difference [P-Q]) were performed on the above carbon materials. Table 8 shows the results.

[Table 7]

Table 7.

| | Carbon source | Parts by mass | Boron source | Parts by mass | Solvent | Parts by mass | Dispersant | Parts by mass | Mixing method | Heat treatment condition | Carbon material |
|---|---|---|---|---|---|---|---|---|---|---|---|
| Example Al9 | F#1 | 98.9 | Boron carbide | 1.1 | Toluene | 1000 | None | 0 | Treatment (6) | 2000°C-1 hour | (28) |
| Example A20 | F#1 | 99.4 | Boron carbide | 0.6 | Toluene | 1000 | None | 0 | Treatment (6) | 2200°C -2 hours | (29) |
| Example A21 | F#1 | 88 | Boric acid | 12 | Toluene/ ethan ol | 900/100 | None | 0 | Treatment (1) | 2100°C-1 hour | (30) |
| Example A22 | F#1 | 85 | Boric acid | 15 | Toluene/ ethan ol | 900/100 | None | 0 | Treatment (1) | 2100°C-1 hour | (31) |
| Example A23 | F#1 | 97.5 | Boron carbide/ Bori c acid | 0.5/2 | Toluene/ ethan ol | 900/100 | PVB | 0.1 | Treatment (7) | 2000°C-1 hour | (32) |
| Example A24 | F#2 | 99 | Boron carbide | 1 | Toluene/ ethan ol | 900/100 | PVP(1) | 0.1 | Treatment (7) | 2000°C-1 hour | (33) |
| Example A25 | CGB-20 | 98 | Boric acid | 2 | Toluene/ ethan ol | 900/100 | None | 0 | Treatment (1) | 2400°C-3 hours | (34) |
| Example A26 | CGB-20 | 98.5 | Boric acid | 1.5 | Toluene/ ethan ol | 900/100 | None | 0 | Treatment (1) | 2600°C-5 hours | (35) |
| Example A27 | CGB-20 | 984 | Boric acid | 1.6 | Toluene/ ethan ol | 900/100 | None | 0 | Treatment (1) | 2000°C-3 hours | (36) |
| Example A28 | CGB-20 | 98.2 | Boric acid | 1.8 | Toluene/ ethan ol | 900/100 | None | 0 | Treatment (1) | 2300°C-3 hours | (37) |
| Example A29 | FB-150 | 98.7 | Boric acid | 1.3 | Toluene/ ethan ol | 800/200 | None | 0 | Treatment (1) | 2500°C-1 hour | (38) |
| Example A30 | FB-150 | 98 | Boric acid | 2 | Tolucnc/ cthan ol | 800/200 | None | 0 | Treatment (1) | 2100°C-1 hour | (39) |
| Example A31 | FB-150 | 99.8 | Boron carbide | 0.2 | Toluene | 1000 | None | 0 | Treatment (8) | 2400°C-1 hour | (40) |

(continued)

| | Carbon source | Parts by mass | Boron source | Parts by mass | Solvent | Parts by mass | Dispersant | Parts by mass | Mixing method | Heat treatment condition | Carbon material |
|---|---|---|---|---|---|---|---|---|---|---|---|
| Example A32 | FB-150 | 99.8 | Boron carbide | 0.2 | Toluene | 1000 | None | 0 | Treatment (8) | 2000°C-1 hour | (41) |
| Example A33 | CGB-50 | 96.8 | Boric acid | 3.2 | Toluene/ethan ol | 700/300 | None | 0 | Treatment (1) | 1850°C-1 hour | (42) |
| Example A34 | CGB-50 | 99 | Boron carbide | 1 | Toluene | 1000 | None | 0 | Treatment (6) | 2000°C-1 hour | (43) |
| Example A35 | CGB-50 | 87.5 | Boric acid | 12 | Toluene/ethan ol | 900/100 | None | 0 | Treatment (1) | 1980°C-1 hour | (44) |
| Example A36 | CGB-50 | 86 | Boric acid | 14 | Toluene/ethan ol | 900/100 | None | 0 | Treatment (1) | 2050°C-1 hour | (45) |

F#2: Flake natural graphite, a particle size of 130 μm, commercially available from Nippon Graphite Industries, Co., Ltd.

[Table 8]

Table 8.

|  | Carbon material | Content of boron on surface X mol% | Content of boron in material Y mol% | X/Y | G/D | P-Q | Volume resistivity $\Omega \cdot cm$ |
|---|---|---|---|---|---|---|---|
| Example A19 | (28) | 0.031 | 0.788 | 0.039 | 2.57 | 223.3 | $2.3 \times 10^{-4}$ |
| Example A20 | (29) | 0.073 | 0.35 | 0.209 | 2.61 | 223.9 | $2.6 \times 10^{-4}$ |
| Example A21 | (30) | 0.033 | 1.81 | 0.018 | 2.05 | 223.8 | $2.7 \times 10^{-4}$ |
| Example A22 | (31) | 0.031 | 2.045 | 0.015 | 2.01 | 224.3 | $3.1 \times 10^{-4}$ |
| Example A23 | (32) | 0.080 | 0.65 | 0.123 | 3.16 | 223.6 | $1.7 \times 10^{-4}$ |
| Example A24 | (33) | 0.075 | 0.69 | 0.109 | 2.17 | 223.9 | $1.9 \times 10^{-4}$ |
| Example A25 | (34) | 0.045 | 0.203 | 0.222 | 1.67 | 224.7 | $4.1 \times 10^{-4}$ |
| Example A26 | (35) | 0.039 | 0.193 | 0.202 | 0.96 | 222.1 | $4.5 \times 10^{-4}$ |
| Example A27 | (36) | 0.038 | 0.189 | 0.201 | 2.23 | 223.5 | $2.9 \times 10^{-4}$ |
| Example A28 | (37) | 0.041 | 0.197 | 0.208 | 1.96 | 223.4 | $3.5 \times 10^{-4}$ |
| Example A29 | (38) | 0.043 | 0.15 | 0.287 | 1.49 | 217.8 | $4.5 \times 10^{-4}$ |
| Example A30 | (39) | 0.054 | 0.224 | 0.241 | 1.64 | 221.1 | $3.6 \times 10^{-4}$ |
| Example A31 | (40) | 0.034 | 0.084 | 0.405 | 1.38 | 226.1 | $4.7 \times 10^{-4}$ |
| Example A32 | (41) | 0.033 | 0.08 | 0.413 | 1.68 | 225.8 | $4.0 \times 10^{-4}$ |
| Example A33 | (42) | 0.004 | 0.43 | 0.009 | 1.69 | 226.3 | $4.3 \times 10^{4}$ |
| Example A34 | (43) | 0.12 | 0.633 | 0.190 | 2.13 | 223.8 | $2.9 \times 10^{-4}$ |
| Example A35 | (44) | 0.037 | 1.87 | 0.020 | 2.03 | 223.7 | $3.1 \times 10^{-4}$ |
| Example A36 | (45) | 0.032 | 2.036 | 0.016 | 1.97 | 224.1 | $3.6 \times 10^{-4}$ |

According to the results of Example A, the carbon material in which the amount of boron in the material is within the scope of the present invention exhibited excellent conductivity.

<Production of binder resin>

[Production Example 1] polyurethane resin solution

455.5 parts of a polyester polyol obtained from telephthalic acid, adipic acid and 3-methyl-1,5-pentanediol ("Kuraray Polyol P-2011," commercially available from Kuraray Co., Ltd., Mn=2,011), 16.5 parts of dimethylolbutanoic acid, 105.2 parts of isophorone diisocyanate, and 140 parts of toluene were put into a reaction container including a stirrer, a thermometer, a reflux condenser, a dropping device, and a nitrogen introduction tube, the mixture was reacted under a nitrogen atmosphere at 90°C for 3 hours, 360 parts of toluene was added thereto and thereby a urethane prepolymer solution having an isocyanate group was obtained.
Next, 969.5 parts of the obtained urethane prepolymer solution having an isocyanate group was added to a mixture of 19.9 parts of isophorone diamine, 0.63 parts of di-n-butylamine, 294.5 parts of 2-propanol, and 335.5 parts of toluene (the total equivalent of amino groups with respect to free isocyanate groups at both ends of the urethane prepolymer was 0.98), and the mixture was reacted at 50°C for 3 hours, and then reacted at 70°C for 2 hours, and diluted with 126 parts of toluene and 54 parts of 2-propanol, and thereby a solution containing a polyurethane resin having an weight average molecular weight of 61,000 and an acid value of 10 mg KOH/g was obtained.
The obtained polyurethane resin solution was diluted with toluene/methyl ethyl ketone/2-propanol (mass ratio: 1/1/1) to obtain a polyurethane resin solution with a solid content of 20 mass%.

[Production Example 2] Polyamide resin solution

156.2 parts of Pripol 1009 (hydrogenated dimer acid, commercially available from Croda Japan) as a polybasic acid compound, 5.5 parts of 5-hydroxyisophthalic acid, 146.4 parts of Priamine 1074 (commercially available from Croda Japan) as a polyamine compound, and 100 parts of deionized water were put into a 4-neck flask including a stirrer, a reflux cooling tube, a nitrogen introduction tube, an introduction tube, and a thermometer, and the mixture was stirred until the heating temperature became constant. When the temperature was stabilized, the temperature was raised to 110°C, and the temperature was raised to 120°C 30 minutes after outflow of water was confirmed. Then, a dehydration reaction continued while the temperature was raised by 10°C at 30 minute intervals. After the temperature reached 230°C, the reaction continued at that temperature for 3 hours, the mixture was left in a vacuum of about 2 kPa for 1 hour, and the temperature was lowered. Finally, an antioxidant was added to obtain a polyamide resin having a weight average molecular weight of 24,000, an acid value of 13.2 mg KOH/g, a hydroxyl value of 5.5 mg KOH/g, and a glass transition temperature of 32°C.
The obtained polyamide resin was diluted with toluene/2-propanol (mass ratio: 2/1) to obtain a polyamide resin solution with a solid content of 20 mass%.

[Production Example 3] Polyester resin solution

Byron 200 (polyester resin, commercially available from Toyobo Co., Ltd.) was diluted with toluene/methyl ethyl ketone (mass ratio: 1/1) to obtain a polyester resin solution with a solid content of 20 mass%.
In addition, the resins were evaluated were as follows.

(Weight average molecular weight (Mw))

The weight average molecular weight was measured using gel permeation chromatography (GPC) "HPC-8020" (commercially available from Tosoh Corporation). GPC is liquid chromatography for separating and quantifying substances dissolved in a solvent (THF; tetrahydrofuran) based on the difference in molecular size. In the present invention, measurement was performed using two "LF-604" columns (GPC column for rapid analysis: 6 mmIDxl50 mm size, commercially available from Showa Denko K.K.) connected in series under conditions of a flow rate of 0.6 ml/min and a column temperature of 40°C, and the weight average molecular weight was determined in terms of polystyrene.

(Acid value (AV))

About 1 g of a sample was precisely weighed out in an Erlenmeyer flask with stopper, 100 ml of a mixed solution of toluene/ethanol (volume ratio: toluene/ethanol=2/1) was added thereto and the sample was dissolved. A phenolphthalein test solution was added thereto as an indicator and the mixture was left for 30 seconds. Then, the solution was titrated with a 0.1 N alcoholic potassium hydroxide solution until it turned light pink, and the acid value was determined according to the following formula.

$$\text{Acid value (mg KOH/g)}=(5.611\text{xaxF})/S$$

where,

S: Amount of sample collected (g)
a: Amount of 0.1 N alcoholic potassium hydroxide solution consumed (ml)
F: Titer of 0.1 N alcoholic potassium hydroxide solution

(Hydroxyl value (OHV))

The hydroxyl value is the amount of hydroxyl groups contained in 1 g of the hydroxyl group-containing resin, which is expressed as the amount (mg) of potassium hydroxide required to neutralize acetic acid bound to hydroxyl groups when the hydroxyl groups are acetylated. The hydroxyl value was measured according to JISK0070, and determined in consideration of the acid value as shown in the following formula in the present invention.

About 1 g of a sample was precisely weighed out in an Erlenmeyer flask with stopper and 100 ml of a mixed solution of toluene/ethanol (volume ratio: toluene/ethanol=2/1) was added thereto and the sample was dissolved. Exactly 5 ml of an acetylating agent (a solution in which 25 g of acetic anhydride was dissolved in pyridine to obtain a volume of 100 ml) was additionally added and the mixture was stirred for about 1 hour. A phenolphthalein test solution was added thereto as an indicator and the mixture was left for 30 seconds. Then, the solution was titrated with a 0.1 N alcoholic potassium hydroxide solution until it turned light pink, and the hydroxyl value was determined according to the following formula.

$$\text{Hydroxyl value (mg KOH/g)}=[\{(b-a)\text{xFx}28.05\}/S]+D$$

where,

S: Amount of sample collected (g)
a: Amount of 0.1 N alcoholic potassium hydroxide solution consumed (ml)
b: Amount of 0.1 N alcoholic potassium hydroxide solution consumed in blank test (ml)
F: Titer of 0.1 N alcoholic potassium hydroxide solution
D: Acid value (mg KOH/g)

(Glass transition temperature (Tg))

The glass transition temperature of the resin was measured by heating the resin from which the solvent was removed by drying at a rate of 2°C/min from -80 to 150°C using "DSC-1" (commercially available from Mettler Toledo).

<Production of conductive composition and conductive film>

[Example B1]

88 parts of the carbon material (2), 60 parts of a polyurethane resin solution (a resin solid content of 12 parts) as a binder resin, and 152 parts of toluene/methyl ethyl ketone/2-propanol (mass ratio: 1/1/1) as a solvent were put into a mixer and mixed, and additionally, the mixture was put into a sand mill and dispersed to obtain a conductive composition (1).

Next, the conductive composition (1) was applied onto a PET film substrate having a thickness of 100 $\mu$m using a doctor blade and then dried in an oven. Then, roll pressing was performed under the condition of a line pressure of 300 kg/cm to obtain a conductive film (1).

[Examples B2 to B5 and Comparative Examples B1 and B2]

Conductive compositions (2) to (7) and conductive films (2) to (7) were obtained in the same method as in Example B1 except that formulation compositions were changed as shown in Table 9-1.

[Example B6]

5 parts of the carbon material (12), 1 part of PVP(2) (polyvinylpyrrolidone, K-30, commercially available from FUJIFILM Wako Pure Chemical Corporation) as a binder resin, and 94 parts of NMP as a solvent were put into a mixer and mixed, and additionally, the mixture was put into a sand mill and dispersed to obtain a conductive composition (8).
Next, the conductive composition (8) was applied onto a PET film substrate having a thickness of 100 μm using a doctor blade and then dried in an oven to obtain a conductive film (8).

[Examples B7 to B10 and Comparative Examples B3 to B5]

Conductive compositions (9) to (12) and (17) to (19) and conductive films (9) to (12) and (17) to (19) were obtained in the same method as in Example B6 at formulation composition proportions shown in Table 9-2.

[Example B11]

3 parts of the carbon material (13), 0.6 parts of polyvinyl alcohol (PVA) (Kuraray Poval SD1000, commercially available from Kuraray Co., Ltd.) as a binder resin, and 96.4 parts of deionized water as a solvent were put into a mixer and mixed, and additionally, the mixture was put into a sand mill and dispersed to obtain a conductive composition (13).
Next, the conductive composition (13) was applied onto a PET film substrate having a thickness of 100 μm using a doctor blade and then dried in an oven to obtain a conductive film (13).

[Examples B12 to B14 and Comparative Examples B6 to B8]

Conductive compositions (14) to (16) and (20) to (22) and conductive films (14) to (16) and (20) to (22) were obtained in the same method as in Example B11 at formulation composition proportions shown in Table 9-2.

[Example B15]

57 parts of the carbon material (29), 13 parts of CB(1) as a conductivity aid, 150 parts of a polyurethane resin solution (30 parts of a resin solid content) as a binder resin, and toluene/methyl ethyl ketone/2-propanol (mass ratio: 1/1/1) as a solvent were put into a mixer and mixed so that the solid content in the composition became 30 mass%, and additionally, the mixture was put into a sand mill and dispersed to obtain a conductive composition (23).
Next, the conductive composition (23) was applied onto a PET film substrate having a thickness of 100 μm using a doctor blade and then dried in an oven to obtain a conductive film (23).

[Examples B16 to B37, and B39 and Comparative Examples B9 to B13]

Conductive compositions (24) to (45), (47) to (52) and conductive films (24) to (45) and (47) to (52) were obtained in the same method as in Example B15 at formulation composition proportions shown in Table 9-3 and Table 9-4.

[Example B38]

56 parts of the carbon material (41), 18 parts of the CB (3) (acetylene black HS-100, commercially available from Denka Co., Ltd.) as a conductivity aid, and 300 parts of an aqueous solution (a resin solid content of 6 parts) in which 2 mass% of water-soluble resin CMC (carboxymethyl cellulose #1240, commercially available from Daicel Miraizu Ltd.) as a binder resin was dissolved were put into a mixer and mixed, and additionally, the mixture was put into a sand mill and dispersed.
Next, 40 parts (a resin solid content of 20 parts) of aqueous fine resin particles (polyacrylic emulsion W-168, a solid content of 50 mass, commercially available from Toyochem Co., Ltd.) as a binder resin were added and mixed in a mixer to obtain a conductive composition (46).
Next, the conductive composition (46) was applied onto a PET film substrate having a thickness of 100 μm using a doctor blade and then dried in an oven to obtain a conductive film (46).

<Evaluation of conductive composition and conductive film>

The obtained conductive compositions and conductive films were evaluated by the following method. Table 9-1 to Table 9-4 show the evaluation results.

(Evaluation of dispersion stability of conductive composition)

Dispersion stability was evaluated from the change in liquid properties after the conductive composition was left and stored at 25°C for 7 days. The change in liquid properties was determined from ease of stirring when stirring was performed with a spatula.

Determination criteria

O: there was no change in liquid properties (good)
△: the viscosity increased, but gelation did not occur (acceptable)
x: gelation occurred (poor)

(Evaluation of coatability)

The obtained conductive film was observed at a magnification of 500 using a video microscope VHX-900 (commercially available from Keyence Corporation), and the coating unevenness and pinholes were determined based on the following criteria. The coating unevenness was determined according to shading on the film surface. Pinholes were determined according to whether there were uncoated defects in the film.

<<Coating unevenness>>

O: no shading on the film surface was confirmed (good)
△: there were 2 to 3 shadings on the film surface but they were very small areas (acceptable)
x: many shadings on the film surface were confirmed or one or more shadings with a strip length of 5 mm or more were confirmed (poor)

<<Pinhole>>

O: no pinholes were confirmed (good)
△: there were 2 to 3 pinholes, but they were very small (acceptable)
x: many pinholes were confirmed or one or more pinholes having a diameter of 1 mm or more were confirmed (very poor)

(Volume resistivity of film)

The volume resistivity of the conductive film was measured according to JIS-K7194 using Loresta GP (commercially available from Nittoseiko Analytech Co., Ltd.) by a 4-terminal method.

(Durability of film)

The durability of the conductive film was evaluated by scratch hardness (pencil method) according to JIS K5600-5-4: 1999 using a pencil with a hardness of HB.

O: plastic deformation and aggregation failure did not occur (good)
△: plastic deformation or aggregation failure partially occurred (acceptable)
x: plastic deformation and aggregation failure occurred (very poor)

[Table 9-1]

Table 9-1.

| | Conductive composition | Carbon material | | Conductivity aid | | Binder resin | | Dispersion stability | Conductive film | Coatability | | Volume re-sistivity of film $\Omega\cdot$cm | Durability of film |
|---|---|---|---|---|---|---|---|---|---|---|---|---|---|
| | | Type | Amount added (parts by mass) | Type | Amount added (parts by mass) | Type | Amount of solid content added (parts by mass) | | | Unevenness | Pinhole | | |
| Example B1 | (1) | (2) | 88 | None | 0 | Potyurethane | 12 | O | (1) | O | O | $6.2\times10^{-3}$ | O |
| Example B2 | (2) | (3) | 88 | None | 0 | Potyurethane | 12 | O | (2) | O | O | $7.9\times10^{-3}$ | O |
| Example B3 | (3) | (5) | 88 | None | 0 | Potyurethane | 12 | Δ | (3) | Δ | Δ | $9.2\times10^{-3}$ | O |
| Example B4 | (4) | (44) | 88 | None | 0 | Potyurethane | 12 | O | (4) | O | O | $6.6\times10^{-3}$ | O |
| Example B5 | (5) | (45) | 88 | None | 0 | Potyurethane | 12 | O | (5) | Δ | Δ | $8.5\times10^{-3}$ | O |
| Comparative Example B1 | (6) | (8) | 88 | None | 0 | Potyurethane | 12 | x | (6) | Δ | x | $5.3\times10^{-2}$ | x |
| Comparative Example B2 | (7) | (10) | 88 | None | 0 | Potyurethane | 12 | x | (7) | x | x | $4.7\times10^{-2}$ | x |

[Table 9-2]

[Table 9-2]

Table 9-2.

| | Conductive composition | Carbon material | | Conductivity aid | | Binder resin | | Dispersion stability | Conductive film | Coatability | | Volume re-sistivity of film $\Omega\cdot$cm | Durability of film |
|---|---|---|---|---|---|---|---|---|---|---|---|---|---|
| | | Type | Amount added (parts by mass) | Type | Amount added (parts by mass) | Type | Amount of solid content added (parts by mass) | | | Unevenness | Pinhole | | |
| Example B6 | (8) | (12) | 5 | None | 0 | PVP(2) | 1 | O | (8) | O | O | $9.7\times10^{-3}$ | O |
| Example B7 | (9) | (13) | 5 | None | 0 | PVP(2) | 1 | O | (9) | O | O | $1.1\times10^{-2}$ | O |
| Example B8 | (10) | (14) | 5 | None | 0 | PVP(2) | 1 | O | (10) | $\Delta$ | $\Delta$ | $2.2\times10^{-2}$ | $\Delta$ |
| Example B9 | (11) | (15) | 5 | None | 0 | PVP(2) | 1 | O | (11) | O | O | $9.2\times10^{-3}$ | O |
| Example B10 | (12) | (16) | 5 | None | 0 | PVP(2) | 1 | O | (12) | O | O | $8.8\times10^{-3}$ | O |
| Example B11 | (13) | (13) | 3 | None | 0 | PVA | 0.6 | O | (13) | O | O | $1.3\times10^{-2}$ | O |
| Example B12 | (14) | (14) | 3 | None | 0 | PVA | 0.6 | O | (14) | $\Delta$ | $\Delta$ | $2.6\times10^{-3}$ | $\Delta$ |
| Example B13 | (15) | (15) | 3 | None | 0 | PVA | 0.6 | O | (15) | O | O | $1.1\times10^{-2}$ | O |
| Example B14 | (16) | (16) | 3 | None | 0 | PVA | 0.6 | O | (16) | O | O | $9.8\times10^{-3}$ | O |
| Comparative Example B3 | (17) | (18) | 5 | None | 0 | PVP(2) | 1 | x | (17) | x | x | $5.9\times10^{-2}$ | x |
| Comparative Example B4 | (18) | (19) | 5 | None | 0 | PVP(2) | 1 | x | (18) | x | x | $8.5\times10^{-2}$ | x |
| Comparative Example B5 | (19) | (20) | 5 | None | 0 | PVP(2) | 1 | x | (19) | x | x | $5.1\times10^{-3}$ | x |
| Comparative Example B6 | (20) | (18) | 3 | None | 0 | PVA | 0.6 | x | (20) | x | x | $6.2\times10^{-2}$ | x |
| Comparative Example B7 | (21) | (19) | 3 | None | 0 | PVA | 0.6 | x | (21) | x | x | $8.8\times10^{-2}$ | x |

(continued)

| | Conductive composition | Carbon material | | Conductivity aid | | Binder resin | | Dispersion stability | Conductive film | Coatability | | Volume re-sistivity of film $\Omega \cdot cm$ | Durability of film |
|---|---|---|---|---|---|---|---|---|---|---|---|---|---|
| | | Type | Amount added (parts by mass) | Type | Amount added (parts by mass) | Type | Amount of solid content added (parts by mass) | | | Unevenness | Pinhole | | |
| Comparative Example B8 | (22) | (20) | 3 | None | 0 | PVA | 0.6 | x | (22) | x | x | $5.8 \times 10^{-3}$ | x |

Carbon material (15) Example A11 (a specific surface area of 550 m$^2$/g)

PVP(2): Polyvinylpyrrolidone K-30 (commercially available from FUJIFILM Wako Pure Chemical Corporation) PVA: Polyvinyl alcohol Kuraray Poval SD1000 (commercially available from Kuraray Co., Ltd.)

[Table 9-3]

[Table 9-3]

Table 9-3.

| | Conductive composition | Carbon material | | Conductivity aid | | Binder resin | | Dispersion stability | Conductive film | Coatability | | Volume resistivity of film Ω·cm | Durability of film |
| | | Type | Amount added (parts by mass) | Type | Amount added (parts by mass) | Type | Amount of solid content added (parts by mass) | | | Unevenness | Pinhole | | |
|---|---|---|---|---|---|---|---|---|---|---|---|---|---|
| Example B15 | (23) | (29) | 57 | CB(1) | 13 | Polyurethane | 30 | O | (23) | Δ | O | $2.6 \times 10^{-3}$ | O |
| Example B16 | (24) | (32) | 57 | CB(1) | 13 | Polyurethane | 30 | O | (24) | Δ | O | $2.1 \times 10^{-3}$ | O |
| Example B17 | (25) | (40) | 57 | CB(1) | 13 | Polyurethane | 30 | O | (25) | Δ | O | $4.1 \times 10^{-3}$ | O |
| Example B18 | (26) | (42) | 57 | CB(1) | 13 | Polyurethane | 30 | O | (26) | Δ | O | $3.5 \times 10^{-3}$ | O |
| Example B19 | (27) | (30) | 57 | CB(1) | 13 | Polyurethane | 30 | O | (27) | Δ | O | $2.7 \times 10^{-3}$ | O |
| Example B20 | (28) | (28)/(17) | 56/14 | None | 0 | Polyurethane | 30 | O | (28) | O | O | $9.9 \times 10^{-4}$ | O |
| Example B21 | (29) | (30) | 56 | CB(1) | 14 | Polyurethane | 30 | O | (29) | Δ | O | $2.2 \times 10^{-3}$ | O |
| Example B22 | (30) | (31) | 56 | CB(1) | 14 | Polyurethane | 30 | O | (30) | Δ | Δ | $4.9 \times 10^{-3}$ | O |
| Example B23 | (31) | (22)/(17) | 60/10 | None | 0 | Polyester | 30 | O | (31) | O | O | $6.1 \times 10^{-3}$ | O |
| Example B24 | (32) | (23)/(17) | 60/10 | None | 0 | Polyester | 30 | O | (32) | O | O | $2.5 \times 10^{-3}$ | O |
| Example B25 | (33) | (25)/(17) | 58/12 | None | 0 | Polyurethane | 30 | O | (33) | O | O | $1.4 \times 10^{-3}$ | O |

| | Conductive composition | Carbon material | | Conductivity aid | | Binder resin | | Dispersion stability | Conductive film | Coatability | | Volume re-sistivity of film $\Omega \cdot cm$ | Durability of film |
|---|---|---|---|---|---|---|---|---|---|---|---|---|---|
| | | Type | Amount added (parts by mass) | Type | Amount added (parts by mass) | Type | Amount of solid content added (parts by mass) | | | Unevenness | Pinhole | | |
| Example B26 | (34) | (26)/ (17) | 58/12 | None | 0 | Polyurethane | 30 | O | (34) | O | O | $1.8 \times 10^{-3}$ | O |
| Example B27 | (35) | (25)/ (24)/ (17) | 50/6/14 | None | 0 | Polyurethane | 30 | O | (35) | O | O | $9.8 \times 10^{-4}$ | O |
| Example B28 | (36) | (28)/ (35)/ (16) | 47/8/12 | None | 0 | Polyurethane | 33 | O | (36) | O | O | $9.9 \times 10^{-4}$ | O |
| CB(1): Ketjen black EC-600JD (commercially available from Lion Specialty Chemicals Co., Ltd., a specific surface area of 1270 $m^2$/g) Carbon material (17): Example A13 (a specific surface area of 180 $m^2$/g) | | | | | | | | | | | | | |

[Table 9-4]

Table 9-4.

| | Conductive composition | Carbon material | | Conductivity aid | | Binder resin | | Dispersion stability | Conductive film | Coatability | | Volume resistivity of film Ω cm | Durability of film |
|---|---|---|---|---|---|---|---|---|---|---|---|---|---|
| | | Type | Amount added (parts by mass) | Type | Amount added (parts by mass) | Type | Amount of solid content added (parts by mass) | | | Unevenness | Pinhole | | |
| Example B29 | (37) | (34) | 58 | CB(2) | 12 | Polyurethane | 30 | O | (37) | Δ | O | $3.9 \times 10^{-3}$ | O |
| Example B30 | (38) | (35) | 58 | CB(2) | 12 | Polyurethane | 30 | O | (38) | Δ | O | $4.7 \times 10^{-3}$ | O |
| Example B31 | (39) | (36) | 58 | CB(2) | 12 | Potyurethane | 30 | O | (39) | Δ | O | $2.8 \times 10^{-3}$ ' | O |
| Example B32 | (40) | (37) | 58 | CB(2) | 12 | Potyurethane | 30 | O | (40) | Δ | O | $3.2 \times 10^{-3}$ | O |
| Example B33 | (41) | (38) | 63 | CB(1) | 12 | Polyamide | 27 | O | (41) | Δ | O | $4.0 \times 10^{-3}$ | O |
| Example B34 | (42) | (39) | 63 | CB(1) | 12 | Polyamide | 27 | O | (42) | Δ | O | $3.3 \times 10^{-3}$ | O |
| Example B35 | (43) | (32) | 62 | CNT(5) | 10 | Potyurethane | 28 | O | (43) | Δ | O | $3.8 \times 10^{-3}$ | O |
| Example B36 | (44) | 32)/ (15) | 62/10 | None | 0 | Potyurethane | 28 | O | (44) | O | O | $2.9 \times 10^{-3}$ | O |
| Example B37 | (45) | (43) | 65 | GNP | 9 | Polyester | 26 | O | (45) | Δ | O | $4.1 \times 10^{-3}$ | O |
| Example B38 | (46) | (41) | 56 | CB(3) | 18 | CMC/aqueous fine resin particle | 6/20 | O | (46) | Δ | O | $3.6 \times 10^{-3}$ ' | O |
| Example B39 | (47) | (28) | 56 | CB(1) | 14 | Potyurethane | 30 | O | (28) | Δ | O | $2.2 \times 10^{-3}$ ' | O |
| Comparative Example B9 | (48) | (8) | 56 | CB(1) | 14 | Polyester | 30 | x | (47) | x | x | $2.7 \times 10^{-2}$ | x |
| Comparative Example B10 | (49) | (9) | 56 | CB(1) | 14 | Polyester | 30 | x | (48) | x | x | $5.3 \times 10^{-2}$ | x |
| Comparative Example B11 | (50) | (10) | 56 | CB(1) | 14 | Potyurethane | 30 | x | (49) | x | x | $2.0 \times 10^{-2}$ | x |
| Comparative Example B12 | (51) | (11) | 60 | CNT(1) | 10 | Polyester | 30 | x | (50) | x | x | $2.3 \times 10^{-2}$ | x |

(continued)

| | Conductive composition | Carbon material | | Conductivity aid | | Binder resin | | Dispersion stability | Conductive film | Coatability | | Volume re-sistivity of film $\Omega$ cm | Durability of film |
| | | Type | Amount added (parts by mass) | Type | Amount added (parts by mass) | Type | Amount of solid content added (parts by mass) | | | Unevenness | Pinhole | | |
|---|---|---|---|---|---|---|---|---|---|---|---|---|---|
| Comparative Example B13 | (52) | (27) | 56 | CB(1) | 14 | Potyurethane | 30 | x | (51) | x | x | $2.1 \times 10^{-2}$ | x |

CB(1): Ketjen black EC-600JD (commercially available from Lion Specialty Chemicals Co., Ltd., a specific surface area of 1270 m$^2$/g)
CB(2): Ketjen black EC-300J (commercially available from Lion Specialty Chemicals Co., L.td., a specific surface area of 800 m$^2$/g)
CB(3): Acetylene black HS-100 (commercially available from Denka Co., Ltd., a specific surface area of 39 m$^2$/g)
CNT(5): Carbon nanotubes AMC® (commercially available from Ube Industries Ltd., a specific surface area of 170 m$^2$/g)
GNP: Graphene nanoplatelets xGNP-C750 (commercially available from XG Sciences, a specific surface area of 750 m$^2$/g)
Carbon material (15) Example A11 (a specific surface area of 550 m$^2$/g)
CMC: Carboxymethyl cellulose #1240 (commercially available from Daicel Miraizu Ltd.)
Aqueous fine resin particles: Polyacrylic emulsion W-168 (commercially available from Toyochem Co., Ltd., a solid content of 50 mass%)

According to the results of Example B, a conductive composition using a boron-doped carbon material in which the amount of boron in the material is within the scope of the present invention had excellent dispersion stability and coatability, and a conductive film formed from the conductive composition achieved both high conductivity and durability.

In addition, comparing Examples B1, and B3 to B5, or Examples B7 and B8, it was found that the difference in the boron content of the carbon material largely influenced the properties of the conductive composition and the conductive film. Since the dispersion tended to be good depending on the boron content, the dispersion stability and coatability were good. In addition, comparing Examples B20, B22, B27, or B35 and B36, regarding a combination of graphite and carbon black or carbon nanotubes, when two or more different boron-doped carbon materials within the scope of the present invention were used in combination, a conductive composition having good coatability was obtained so that a uniform coating film without unevenness was obtained.

Therefore, these results suggested that factors other than the conductivity derived from the carbon material were associated. Although details are unknown in the current stage, it was speculated that, in the conductive composition of the present invention, since the boron-doped carbon material had not only excellent conductivity but also good dispersion and dispersion stability, and also had good coatability, by efficiently forming a conductive network of the carbon material in the film, excellent conductivity was exhibited. In addition, it was speculated that a uniform network of the carbon material improved a packing property between the carbon materials, enabled formation of a dense film, and also improved the durability of the conductive film.

<Production of mixture ink for positive electrode>

[Example C1]

The conductive composition (8) shown in Table 10 and NMP in which 8 mass% of PVDF (Solef#5130, commercially available from Solvey) was dissolved were stirred so that the composition (mass ratio) of the carbon material, PVDF, and the positive electrode active material in the conductive composition was 0.25/1.5/98.25, and a positive electrode active material NCM523 (composition: $LiNi_{0.5}Co_{0.2}Mn_{0.3}O_2$, commercially available from Nippon Chemical Industrial Co., Ltd.) was then added and stirred. In addition, NMP was added and stirred so that the solid content of the mixture ink for a positive electrode was 75 mass% to obtain a mixture ink for a positive electrode (1). A rotation/revolution mixer was used for all of the stirrings.

[Examples C2 to C5 and Comparative Examples C1 to C3]

Mixture inks for a positive electrode (2) to (8) were obtained in the same manner as in Example C1 except that conductive compositions were changed as shown in Table 10.

<Evaluation of mixture ink for positive electrode>

(Volume resistivity of positive electrode mixture layer)

The mixture ink for a positive electrode was applied onto a PET substrate using an applicator so that the basis weight of the electrode was 20 mg/cm² and then dried in an electric oven at 120°C for 30 minutes to obtain a positive electrode. Then, using Loresta GP, MCP-T610 (commercially available from Nittoseiko Analytech Co., Ltd.), the surface resistivity ($\Omega/\square$) of the dried film was measured. After the measurement, the volume resistivity ($\Omega \cdot cm$) of the electrode film for a positive electrode was obtained by multiplying the thickness of the mixture layer formed on the PET substrate. The thickness of the mixture layer was obtained by subtracting the thickness of the PET substrate from the average value measured at five points in the film using a film thickness meter.

Determination criteria

O: the volume resistivity ($\Omega \cdot cm$) of the positive electrode mixture layer was less than 8 (very good)
O: the volume resistivity ($\Omega \cdot cm$) of the positive electrode mixture layer was 8 or more and less than 12 (good)
△: the volume resistivity ($\Omega \cdot cm$) of the positive electrode mixture layer was 12 or more and less than 16 (acceptable)
x: the volume resistivity ($\Omega \cdot cm$) of the positive electrode mixture layer was 16 or more (poor)

(Peeling strength of positive electrode mixture layer)

The mixture ink for a positive electrode was applied onto an aluminum foil using an applicator so that the basis weight of the electrode was 20 mg/cm$^2$ and then dried in an oven at 120°C for 30 minutes. Then, two rectangles of 90 mmx20 mm were cut with the coating direction as the major axis. The peeling strength was measured using a tensile tester and evaluated by the 180 degree peeling test method. Specifically, a double-sided tape with a size of 100 mmx30 mm was attached to a stainless steel plate, the produced mixture layer was adhered to the other side of the double-sided tape, peeling was performed while pulling upward from the bottom at a certain speed (50 mm/min), and the average value of the stress in this case was used as the peeling strength.

Determination criteria

O: the peeling strength (N/cm) of the positive electrode mixture layer was 0.3 or more (very good)
O: the peeling strength (N/cm) of the positive electrode mixture layer was 0.25 or more and less than 0.3(good)
△: the peeling strength (N/cm) of the positive electrode mixture layer was 0.2 or more and less than 0.25 (acceptable)
x: the peeling strength (N/cm) of the positive electrode mixture layer was less than 0.2 (poor)

<Production of mixture ink for negative electrode>

[Example C6]

The conductive composition (13) shown in Table 10 and an aqueous solution in which 2 mass% of CMC (#1190, commercially available from Daicel FineChem Co., Ltd.) was dissolved were stirred so that the composition (mass ratio) of the carbon material, CMC, SBR, and a negative electrode active material (graphite/silicon monoxide) in the conductive composition was 0.5/1/88/9/1.5, and a silicon monoxide (SILICON MONOOXIDE, SiO 1.3C 5 μm, commercially available from Osaka Titanium Technologies Co., Ltd.) was then added and stirred. In addition, graphite (CGB-20, commercially available from Nippon Graphite Industries, Co., Ltd.) was added and stirred. In addition, SBR (TRD2001, a dispersion liquid with a solid content of 48 mass%, commercially available from JSR Corporation) was then added and stirred. Finally, deionized water was added and stirred so that the solid content of the mixture ink for a negative electrode was 50 mass% to obtain a mixture ink for a negative electrode (1). A rotation/revolution mixer was used for all of the stirrings.

[Examples C7 to C9 and Comparative Examples C4 to C6]

Mixture inks for a negative electrodes (2) to (7) were obtained in the same manner as in Example C6 except that conductive compositions were changed as shown in Table 10.

<Evaluation of mixture ink for negative electrode>

(Volume resistivity of negative electrode mixture layer)

The volume resistivity (Ω·cm) of the negative electrode mixture layer was measured in the same manner as in the positive electrode mixture layer except that the mixture ink for a negative electrode was used and the basis weight of the electrode was 8 mg/cm$^2$.

Determination criteria

O: the volume resistivity (Ω·cm) of the negative electrode mixture layer was less than 0.12 (very good)
O: the volume resistivity (Ω·cm) of the negative electrode mixture layer was 0.12 or more and less than 0.15 (good)
△: the volume resistivity (Ω·cm) of the negative electrode mixture layer was 0.15 or more and less than 0.25 (acceptable)
x: the volume resistivity (Ω·cm) of the negative electrode mixture layer was 0.25 or more (poor)

(Peeling strength of negative electrode mixture layer)

The peeling strength of the negative electrode mixture layer was measured in the same manner as in the peeling strength of the positive electrode mixture layer except that the mixture ink for a negative electrode was applied onto a copper foil using an applicator so that the basis weight of the electrode was 8 mg/cm$^2$.

Determination criteria

O: the peeling strength (N/cm) of the negative electrode mixture layer was 0.5 or more (very good)
O: the peeling strength (N/cm) of the negative electrode mixture layer was 0.4 or more and less than 0.5 (good)
△: the peeling strength (N/cm) of the negative electrode mixture layer was 0.3 or more and less than 0.4 (acceptable)
x: the peeling strength (N/cm) of the negative electrode mixture layer was less than 0.3 (poor)

<Production of non-aqueous electrolyte secondary battery>

A standard negative electrode (A) and standard positive electrode (C) for evaluation were produced by the following method.

[Production of standard negative electrode (A)]

Acetylene black (Denka Black (registered trademark) HS-100, commercially available from Denka Co., Ltd.), CMC (carboxymethyl cellulose #1190, commercially available from Daicel FineChem Co., Ltd.), and water were put into a plastic container and then stirred using a rotation/revolution mixer. In addition, graphite (CGB-20, commercially available from Nippon Graphite Industries, Co., Ltd.) as a negative electrode active material was added, and stirred using a rotation/revolution mixer. Subsequently, SBR (TRD2001, a dispersion liquid with a solid content of 48 mass%, commercially available from JSR Corporation) was added and stirred using a rotation/revolution mixer to obtain a mixture ink for a standard negative electrode. The solid content of the mixture ink for a standard negative electrode was 48 mass%. The solid content ratio of the negative electrode active material:conductive material:CMC:SBR in the mixture ink for a standard negative electrode was 97:0.5:1:1.5.
Next, the mixture ink for a standard negative electrode was applied onto a copper foil having a thickness of 20 μm as a current collector using an applicator and then dried in an oven at 80°C for 30 minutes, and adjusted so that the basis weight per unit area of the electrode was 10 mg/cm$^2$. In addition, a rolling treatment was performed with a roll press to produce a standard negative electrode (A) in which the density of the negative electrode mixture layer was 1.6 g/cm$^3$.

[Production of standard positive electrode (C)]

93 parts of a positive electrode active material (HED (registered trademark) NCM-111 1100, commercially available from BASF TODA Battery Materials LLC), 4 parts of acetylene black (Denka Black (registered trademark) HS100, commercially available from Denka Co., Ltd.), and 3 parts of PVDF (Kureha KF polymer W#1300, commercially available from Kureha Battery Materials Japan Co., Ltd.) were put into a plastic container, and then mixed using a spatula until the powder was uniform. Then, 20.5 parts of NMP was added and stirred using a rotation/revolution mixer. Then, the mixture in the plastic container was mixed using a spatula until it became uniform, and stirred using the rotation/revolution mixer. In addition, 14.6 parts of NMP was then added and stirred using the rotation/revolution mixer. Finally, stirring was performed using a disper to obtain a standard mixture ink for a positive electrode. Then, the standard mixture ink for a positive electrode was applied onto an aluminum foil having a thickness of 20 μm as a current collector using an applicator and then dried in an oven at 120°C for 30 minutes and adjusted so that the basis weight per unit area of the electrode was 20 mg/cm$^2$. In addition, a rolling treatment was performed with a roll press to produce a standard positive electrode (C) in which the density of the mixture layer was 3.1 g/cm$^3$.

[Examples D1 to D9 and Comparative Examples D1 to D6]

A positive electrode and negative electrode for evaluation were produced by the following method.
The mixture ink for a positive electrode shown in Table 11 was applied onto an aluminum foil having a thickness of 20 μm as a current collector using an applicator and then dried in an oven at 120°C for 30 minutes and adjusted so that the basis weight of the electrode was 20 mg/cm$^2$. In addition, a rolling treatment was performed with a roll press to produce a positive electrode in which the density of the positive electrode mixture layer was 3.1 g/cm$^3$.

On the other hand, the mixture ink for a negative electrode shown in Table 11 was applied onto a copper foil having a thickness of 20 μm as a current collector using an applicator and then dried in an oven at 80°C for 30 minutes and adjusted so that the basis weight of the electrode was 10 mg/cm$^2$. In addition, a rolling treatment was performed with a roll press to produce a negative electrode in which the density of the negative electrode mixture layer was 1.6 g/cm$^3$.

The positive electrode and the standard negative electrode (A) shown in Table 11 or the negative electrode and the standard positive electrode (C) shown in Table 11 were cut into 50 mmx45 mm, and 45 mmx40 mm, respectively. Then, the positive electrode, the separator (porous polypropylene film) and the standard negative electrode (A) were laminated, and the standard positive electrode (C), the separator (porous polypropylene film) and the negative electrode were laminated, and each laminate was inserted into an aluminum laminated bag and dried in an electric oven at 70°C for 1 hour. Subsequently, 2 mL of an electrolytic solution was injected into a glove box filled with argon gas, and an aluminum laminated bag was sealed to produce non-aqueous electrolyte secondary batteries (1) to (15). The electrolytic solution was a non-aqueous electrolytic solution in which 1 part of vinylene carbonate (VC) as an additive with respect to 100 parts of the electrolytic solution was additionally added to a mixed solvent in which ethylene carbonate, dimethyl carbonate and diethyl carbonate were mixed at a ratio of 1:1:1 (volume ratio), and LiPF$_6$ was then dissolved at a concentration of 1 M.

<Evaluation of non-aqueous electrolyte secondary battery>

The obtained non-aqueous electrolyte secondary batteries were evaluated as follows. Table 11 shows the evaluation results.

(Rate property)

The non-aqueous electrolyte secondary battery was placed in a thermostatic chamber at 25°C, and charging and discharging measurement was performed using a charging and discharging device (SM-8, commercially available from Hokuto Denko Corporation). Constant current and constant voltage charging (a cutoff current of 1 mA (0.02C)) was performed at a charging current of 10 mA (0.2C) and a charge final voltage of 4.3 V and constant current discharging was then performed at a discharging current of 10 mA (0.2C) and a discharge final voltage of 3 V. After this operation was repeated three times, constant current and constant voltage charging (a cutoff current of (1 mA (0.02C)) was performed at a charging current of 10 mA (0.2C) and a charge final voltage of 4.3 V, constant current discharging was performed at a discharging current of 0.2C and 3C until the discharge final voltage reached 3.0 V, and the discharging capacity was obtained. The rate property can be expressed as a ratio of the 0.2C discharging capacity and the 3C discharging capacity according to the following Formula 1.

(Formula 1)

$$\text{Rate property} = 3C \text{ discharging capacity} / 3^{rd}\ 0.2C \text{ discharging capacity} \times 100\ (\%)$$

Determination criteria

O : when the rate property was 80% or more (extremely good)
O: when the rate property was 70% or more and less than 80% (very good)
O△: when the rate property was 60% or more and less than 70% (good)
△ : when the rate property was 50% or more and less than 60% (acceptable)
x : when the rate property was less than 50% (poor)

(Cycle property)

The non-aqueous electrolyte secondary battery was placed in a thermostatic chamber at 40°C, and charging and discharging measurement was performed using a charging and discharging device (SM-8, commercially available from Hokuto Denko Corporation). Constant current and constant voltage charging (a cutoff current of 2.5 mA (0.05C)) was performed at a charging current of 25 mA (0.5C) and a charge final voltage of 4.3 V and constant current discharging was then performed at a discharging current of 25 mA (0.5C) and a discharge final voltage of 3 V. This operation was repeated 200 times. The cycle property can be expressed as a ratio between the 3$^{rd}$ 0.5C discharging capacity and the

**EP 4 129 902 A1**

200th 0.5C discharging capacity at 25°C according to the following Formula 2.

(Formula 2)

Cycle property=3rd 0.5C discharging capacity/200th 0.5C discharging capacityx100 (%)

Determination criteria

⊙ : when the cycle property was 80% or more (extremely good)
O : when the cycle property was 70% or more and less than 80% (very good)
O△: when the cycle property was 60% or more and less than 70% (good)
△ : when the cycle property was 60% or more and less than 70% (acceptable)
x : when the cycle property was less than 60% (poor)

[Table 10]

Table 10.

| | Mixture ink | Conductive composition | Volume resistivity of mixture layer | Peeling strength of mixture layer |
|---|---|---|---|---|
| Example C1 | for positive electrode (1) | (8) | ⊙ | ⊙ |
| Example C2 | for positive electrode (2) | (9) | ⊙ | ⊙ |
| Example C3 | for positive electrode (3) | (10) | O | O |
| Example C4 | for positive electrode (4) | (11) | ⊙ | ⊙ |
| Example C5 | for positive electrode (5) | (12) | ⊙ | ⊙ |
| Comparative Example C1 | for positive electrode (6) | (17) | x | x |
| Comparative Example C2 | for positive electrode (7) | (18) | x | x |
| Comparative Example C3 | for positive electrode (8) | (19) | △ | x |
| Example C6 | for negative electrode (1) | (13) | ⊙ | ⊙ |
| Example C7 | for negative electrode (2) | (14) | O | O |
| Example C8 | for negative electrode (3) | (15) | ⊙ | ⊙ |
| Example C9 | for negative electrode (4) | (16) | ⊙ | ⊙ |
| Comparative Example C4 | for negative electrode (5) | (20) | x | x |

49

(continued)

|  | Mixture ink | Conductive composition | Volume resistivity of mixture layer | Peeling strength of mixture layer |
|---|---|---|---|---|
| Comparative Example C5 | for negative electrode (6) | (21) | x | x |
| Comparative Example C6 | for negative electrode (7) | (22) | Δ | x |

[Table 11]

Table 11.

|  | Non-aqueous electrolyte secondary battery | Positive electrode | Negative electrode | Rate property | Cycle property |
|---|---|---|---|---|---|
| Example D 1 | (1) | for positive electrode (1) | Standard negative electrode (A) | ⊙ | ⊙ |
| Example D2 | (2) | for positive electrode (2) | Standard negative electrode (A) | ⊙ | O |
| Example D3 | (3) | for positive electrode (3) | Standard negative electrode (A) | O | OΔ |
| Example D4 | (4) | for positive electrode (4) | Standard negative electrode (A) | ⊙ | ⊙ |
| Example D5 | (5) | for positive electrode (5) | Standard negative electrode (A) | ⊙ | O |
| Comparative Example D1 | (6) | for positive electrode (6) | Standard negative electrode (A) | x | x |
| Comparative Example D2 | (7) | for positive electrode (7) | Standard negative electrode (A) | x | x |
| Comparative Example D3 | (8) | for positive electrode (8) | Standard negative electrode (A) | Δ | x |
| Example D6 | (9) | Standard positive electrode (C) | for negative electrode (1) | ⊙ | O |
| Example D7 | (10) | Standard positive electrode (C) | for negative electrode (2) | O | OΔ |
| Example D8 | (11) | Standard positive electrode (C) | for negative electrode (3) | ⊙ | ⊙ |
| Example D9 | (12) | Standard positive electrode (C) | for negative electrode (4) | ⊙ | O |
| Comparative Example D4 | (13) | Standard positive electrode (C) | for negative electrode (5) | x | x |

(continued)

|  | Non-aqueous electrolyte secondary battery | Positive electrode | Negative electrode | Rate property | Cycle property |
|---|---|---|---|---|---|
| Comparative Example D5 | (14) | Standard positive electrode (C) | for negative electrode (6) | x | x |
| Comparative Example D6 | (15) | Standard positive electrode (C) | for negative electrode (7) | Δ | x |

According to the results of Examples C and D, a lithium ion secondary battery having an excellent rate property and cycle property was obtained using the conductive composition containing the carbon material of the present invention.

It was speculated that the conductive composition of the present invention had good dispersion and dispersion stability, and carbon nanotubes efficiently formed a conductive network in the electrode, and thus the cycle property was good. In addition, Comparative Examples D3 and D6 had a poor cycle property even if a conductive network was formed in the electrode. This was thought to be caused by the fact that, since the carbon nanotubes in which the amount of boron was within the scope of the present invention were harder, the conductive network of the carbon nanotubes was maintained without collapsing despite repeated expansion and contraction of the active material during charging and discharging of the battery, and the cycle property was improved. On the other hand, comparing Examples D1 to D3, or Examples D6 to D8, it was found that the difference in the content of boron of the carbon nanotubes and the X/Y value influenced battery properties (the rate property and the cycle property).

Priority is claimed on Japanese Patent Application No. 2020-067315, filed April 3, 2020, the content of which is incorporated herein by reference.

## Claims

1.  A carbon material having a carbon hexagonal network plane as a basic skeleton and doped with boron to replace carbon,
    wherein a content of boron in the carbon material is 0.005 to 15 mol%, and when a content of boron doped to replace carbon on the surface of the carbon material is X (mol%) and a content of boron in the carbon material is Y (mol%), X/Y<0.8 is satisfied.

2.  The carbon material according to claim 1,
    wherein the carbon material contains at least one selected from a group consisting of graphite, graphene nanoplatelets, graphene, and carbon nanotubes.

3.  The carbon material according to claim 1 or 2,
    wherein 0.01<X/Y<0.4 is satisfied.

4.  A conductive composition comprising:

    the carbon material according to any one of claims 1 to 3; and
    at least one of a binder resin and a solvent.

5.  The conductive composition according to claim 4,
    wherein the carbon material contains two or more different carbon materials.

6.  The conductive composition according to claim 4 or 5, further comprising a conductivity aid.

7.  The conductive composition according to any one of claims 4 to 6, further comprising an active material,
    wherein the conductive composition is used as a mixture ink for forming a positive electrode or negative electrode for an electric storage device.

8.  A conductive film formed from the conductive composition according to any one of claims 4 to 7.

9.  An electric storage device comprising an electrode having a mixture layer formed from the conductive composition according to claim 7.

FIG. 1

FIG. 2

### INTERNATIONAL SEARCH REPORT

| International application No. |
| --- |
| PCT/JP2021/013636 |

**A. CLASSIFICATION OF SUBJECT MATTER**
C01B 32/20(2017.01)i; C01B 32/158(2017.01)i; C01B 32/182(2017.01)i
FI: C01B32/20; C01B32/158; C01B32/182

According to International Patent Classification (IPC) or to both national classification and IPC

**B. FIELDS SEARCHED**

Minimum documentation searched (classification system followed by classification symbols)
C01B32/20; C01B32/158; C01B32/182; H01B1/00; H01M4/00-4/62

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-220218 A (PETOCA LTD.) 09 August 2002 (2002-08-09) claims, paragraphs [0014]-[0019] | 1-9 |
| X | WO 2014/185496 A1 (SHOWA DENKO KABUSHIKI KAISHA) 20 November 2014 (2014-11-20) claims, paragraphs [0045], [0057], [0063]-[0091] | 1-5, 8 |
| A | JP 2000-313609 A (NKK CORP.) 14 November 2000 (2000-11-14) entire text | 1-9 |
| A | KR 10-2013-0076243 A (RESEARCH INSTITUTE OF INDUSTRIAL SCIENCE & TECHNOLOGY) 08 July 2013 (2013-07-08) entire text | 1-9 |
| A | CN 107720735 A (XIPAIKE (XIAMEN) TECHNOLOGY CO., LTD.) 23 February 2018 (2018-02-23) entire text | 1-9 |

☒ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 June 2021 (10.06.2021) | 29 June 2021 (29.06.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2021/013636

C (Continuation).  DOCUMENTS CONSIDERED TO BE RELEVANT

| Category* | Citation of document, with indication, where appropriate, of the relevant passages | Relevant to claim No. |
|---|---|---|
| P, X | CN 111285354 A (NATIONAL DONG HWA UNIVERSITY) 16 June 2020 (2020-06-16) claims, paragraphs [0033]-[0063] | 1-9 |

Form PCT/ISA/210 (continuation of second sheet) (January 2015)

INTERNATIONAL SEARCH REPORT
Information on patent family members

International application No.

PCT/JP2021/013636

| Patent Documents referred in the Report | Publication Date | Patent Family | Publication Date |
|---|---|---|---|
| JP 2002-220218 A | 09 Aug. 2002 | (Family: none) | |
| WO 2014/185496 A1 | 20 Nov. 2014 | US 2016/0096964 A1 claims, paragraphs [0115], [0135], [0145]-[0218] EP 2998271 A1 CN 105209385 A | |
| JP 2000-313609 A | 14 Nov. 2000 | US 6485864 B1 entire text TW 523951 B KR 10-2000-0058189 A | |
| KR 10-2013-0076243 A | 08 Jul. 2013 | (Family: none) | |
| CN 107720735 A | 23 Feb. 2018 | (Family: none) | |
| CN 111285354 A | 16 Jun. 2020 | (Family: none) | |

Form PCT/ISA/210 (patent family annex) (January 2015)

**EP 4 129 902 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 20002813238 A
- JP 2009256118 A
- WO 2014185496 A
- JP 2019108256 A
- JP 2020067315 A

58